# EUROPEAN PATENT SPECIFICATION

(11) **EP 4 513 177 B1**
(45) Date of publication and mention of the grant of the patent: **09.12.2026**
(21) Application number: 23790872.8
(22) Date of filing: 22.02.2023
(51) Int. Cl.: G06T 7/00, G06T 7/12, G06V 10/25, G06V 10/26, G01N 21/88, G01N 21/89, H01M 10/04, G01N 21/95, H01M 10/42

(54) **METHOD, APPARATUS, AND SYSTEM FOR PERFORMING FOLDED CORNER DETECTION ON CATHODE SHEET OF COMPOSITE MATERIAL BELT**
VERFAHREN, VORRICHTUNG UND SYSTEM ZUR DURCHFÜHRUNG EINER ERKENNUNG GEFALTETER ECKEN AUF EINER KATHODENFOLIE EINES VERBUNDSTOFFBAND
PROCÉDÉ, APPAREIL ET SYSTÈME POUR EFFECTUER UNE DÉTECTION DE COIN PLIÉ SUR UNE FEUILLE DE CATHODE DE COURROIE EN MATÉRIAU COMPOSITE

(30) Priority: 18.04.2022 CN 202210405575
(43) Date of publication of application: 26.02.2025
(73) Proprietor: Contemporary Amperex Technology Co., Limited, Ningde, Fujian 352100 (CN)
(72) Inventor: ZHAO, Baiquan, Ningde, Fujian 352100 (CN); NI, Dajun, Ningde, Fujian 352100 (CN); FENG, Shiping, Ningde, Fujian 352100 (CN); WU, Qian, Ningde, Fujian 352100 (CN); ZHENG, Qiuhui, Ningde, Fujian 352100 (CN); DAI, Ya, Ningde, Fujian 352100 (CN)
(74) Representative: Ran, Handong
(86) International application number: PCT/CN2023/077610
(87) International publication number: WO 2023/202209

(56) References cited:
- CN-A- 112 241 699
- CN-A- 113 203 745
- CN-A- 113 203 745
- CN-A- 113 363 595
- CN-A- 113 376 177
- CN-A- 113 899 766
- CN-A- 113 971 663
- CN-A- 114 162 376

## Description

### TECHNICAL FIELD

This application relates to the field of battery technologies, and in particular, to a method, apparatus, and system for corner fold detection on a cathode electrode plate of a composite material strip, an electronic device, a laminator, a computer-readable storage medium, and a computer program product.

### BACKGROUND

Energy conservation and emission reduction are crucial to the sustainable development of the automobile industry. Electric vehicles, with their advantages in energy conservation and emission reduction, have become an important part of the sustainable development of the automobile industry. For electric vehicles, battery technology is an important factor in connection with their development.

In the related art, a rechargeable battery (a battery that can be charged after being discharged to activate active substances for continuous use, also known as secondary battery) includes a battery box and a plurality of battery cells connected in series and/or in parallel in the battery box. The battery cell is the smallest unit for providing energy in a battery. A cell assembly is a key component in which electrochemical reactions take place in the battery cell and mainly includes an anode electrode plate, a cathode electrode plate, and a separator that separates the anode electrode plate from cathode electrode plate.

Based on the production process, cell assemblies can be divided into wound cell assemblies and laminated cell assemblies. Compared with the wound cell assemblies, the laminated cell assemblies are used in a wider range of application scenarios due to their characteristics such as high capacity, low internal resistance, and suitability for more shape designs. The lamination process for the laminated cell assemblies is mainly carried out in a laminator.

How a production yield of laminated cell assemblies is improved is an urgent technical problem to be resolved in the art.

### SUMMARY

This application is intended to resolve at least one of the technical problems in the prior art. Therefore, an objective of this application is to propose a method, apparatus, and system for corner fold detection on a cathode electrode plate of a composite material strip, an electronic device, a laminator, a computer-readable storage medium, and a computer program product, so as to improve the production yield of laminated cell assemblies.

According to an aspect of this application, a method for corner fold detection on a cathode electrode plate of a composite material strip is provided, including: acquiring a to-be-inspected image of a composite material strip by using an image acquisition unit, where the to-be-inspected image includes an electrode plate body zone of the cathode electrode plate; extracting the electrode plate body zone from the to-be-inspected image; and performing corner fold detection on the electrode plate body zone.

In an embodiment solution of this application, an image acquisition unit is used to acquire an image of a composite material strip, and based on the image, an electrode plate body zone is inspected for a corner fold, so that a cathode plate of the composite material strip can be inspected in real time for a corner fold in the lamination process, which is beneficial for relevant personnel to adjust relevant components of a laminator in a timely manner to prevent the electrode plate from generating a corner fold defect again in the lamination process, thereby reducing waste of production materials and improving the equipment efficiency of the laminator. In addition, the foregoing method for corner fold detection on the electrode plate based on computer vision technology can also improve the accuracy of corner fold detection on the electrode plate, thereby effectively controlling the outflow of cell assemblies with a corner fold on the cathode electrode plate.

In some embodiments, the extracting the electrode plate body zone from the to-be-inspected image includes extracting the electrode plate body zone from the to-be-inspected image at least based on a first pixel value range of the electrode plate body zone. Because there are certain differences in pixel values of individual zones on the to-be-inspected image, the technical solution of extracting the electrode plate body zone based on the pixel values of the individual zones on the to-be-inspected image can quickly and effectively extract the electrode plate body zone, thereby improving the accuracy of corner fold detection.

In some embodiments, the to-be-inspected image further includes a separator zone at least partially surrounding the electrode plate body zone, a backup roller zone at least partially surrounding the separator zone, and a plurality of tab protruding zones located at two sides of the separator zone, where the extracting the electrode plate body zone from the to-be-inspected image at least based on a first pixel value range of the electrode plate body zone includes: removing the backup roller zone from the to-be-inspected image based on a corresponding second pixel threshold range of the backup roller zone, to obtain a first intermediate image; extracting, from the first intermediate image, an image of a maximum rectangular region inscribed in the edge of the first intermediate image as a second intermediate image, to remove the plurality of tab protruding zones; and extracting the electrode plate body zone from the second intermediate image based on a corresponding first pixel threshold range of the electrode plate body zone. Because there are certain differences in pixel values of the electrode plate body zone, the separator zone, the backup roller zone, and the tab protruding zones, the technical solution of extracting the electrode plate body zone step by step based on the pixel values of the individual zones of the to-be-inspected image can quickly and effectively extract the electrode plate body zone, thereby improving the accuracy of corner fold detection.

In some embodiments, the performing corner fold detection on the electrode plate body zone includes: determining a plurality of corner inspection zones based on the electrode plate body zone, where each corner inspection zone includes a corresponding one of a plurality of corner points of the electrode plate body zone, the plurality of corner points being formed by intersection of every two adjacent ones of a plurality of edge lines of the electrode plate body zone; and performing corner fold detection on the plurality of corner inspection zones. With the plurality of corner inspection zones formed in the electrode plate body zone and corner fold inspection performed on the corner inspection zones in a targeted manner, the inspection range can be narrowed, thereby effectively reducing the calculation for inspection and improving the inspection efficiency. In addition, narrowing the inspection range can also avoid interference from other regions, thereby effectively avoiding false detection and improving the accuracy of corner fold detection.

In some embodiments, each corner inspection zone is located in a region enclosed by a plurality of edge lines of the electrode plate body zone, and a corresponding one of a plurality of corner points is used as one vertex of the corner inspection zone. The foregoing embodiment solution can define the corner inspection zones more accurately to further narrow the inspection range, thereby more effectively reducing the calculation for inspection and improving the accuracy of corner fold detection.

In some embodiments, the determining a plurality of corner inspection zones based on the electrode plate body zone includes: determining a plurality of corner points of the electrode plate body zone; and based on each corner point and its corresponding two adjacent edge lines, determining a corner inspection zone corresponding to the corner point. The foregoing determination of a corner inspection zone based on a corner point and two edge lines forming the corner point allows for more accurate definition of the corner inspection zone, so as to further narrow the inspection range, thereby reducing the calculation of detection more effectively and improving the accuracy of corner fold detection.

In some embodiments, the determining a plurality of corner points of the electrode plate body zone includes: determining a minimum rectangular region circumscribing the electrode plate body zone; and determining four vertices of the minimum rectangular region as the plurality of corner points. The foregoing embodiment solution of determining corner points by using a circumscribed minimum rectangular region can quickly and accurately locate the corner points of the electrode plate body zone and accordingly determine a corner inspection zone, thereby contributing to quick and accurate corner fold detection.

In some embodiments, the determining a plurality of corner points of the electrode plate body zone includes: determining a plurality of edge lines of the electrode plate body zone; and determining intersection points of every two adjacent ones of the plurality of edge lines as the plurality of corner points. The foregoing embodiment solution of determining corner points based on predetermined edge lines can more accurately locate the corner points of the electrode plate body zone and accordingly determine a corner inspection zone, thereby contributing to quick and accurate corner fold detection.

In some embodiments, the determining a plurality of edge lines of the electrode plate body zone includes: determining position information of a center point of the electrode plate body zone; based on the position information of the center point and size information of a standard electrode plate, forming a plurality of edge detection zones in the to-be-inspected image, each edge detection zone corresponding to one of a plurality of edge lines; based on the plurality of edge detection zones, performing edge detection on the electrode plate body zone to obtain a plurality of sidelines by using an edge detection algorithm; and based on the plurality of sidelines, generating a plurality of edge lines of the electrode plate body zone. The method of providing edge detection zones for edge detection can narrow the range of edge detection, thereby effectively reducing the calculation for edge detection, avoiding interference from other regions, and improving the accuracy of edge detection.

In some embodiments, the generating a plurality of edge lines of the electrode plate body zone includes: determining an angle of each of the plurality of sidelines with respect to a corresponding edge line of the to-be-inspected image; and determining the sidelines as edge lines in response to the angle of each sideline being within a corresponding angle threshold range. The foregoing embodiment solution can determine whether a detected edge line is correct or not, so as to avoid that a wrongly determined corner inspection zone affects the accuracy of corner fold detection.

In some embodiments, the performing corner fold detection on the plurality of corner inspection zones includes: determining whether a pixel value of each pixel in each corner inspection zone is greater than a first pixel threshold; and determining that a corner fold is present in the electrode plate body zone in response to a determination that pixel values of one or more pixels in at least one corner inspection zone are greater than a first pixel threshold. Because there is a certain difference in pixel values between the electrode plate body zone and the separator zone, with the foregoing embodiment solution of determining whether a corner fold is present based on the pixel values in the corner inspection zone, the corner fold detection can be quickly and accurately performed.

In some embodiments, when the to-be-inspected image further includes a separator zone surrounding the electrode plate body zone, the determining that a corner fold is present in the electrode plate body zone in response to a determination that pixel values of one or more pixels in at least one corner inspection zone are greater than a first pixel threshold includes: determining that a suspected corner fold is present in the electrode plate body zone in response to a determination that the pixel values of one or more pixels in at least one corner inspection zone are greater than the first pixel threshold; extracting pixels with pixel values within a pixel threshold range of the separator zone in at least one corner inspection zone to obtain a set of abnormal pixels; dividing the set of abnormal pixels into at least one independently connected abnormal pixel region; and determining that a corner fold is present in the electrode plate body zone in response to an area of any abnormal pixel region being greater than a preset area threshold. The foregoing embodiment solution of determining whether a corner fold is present in the electrode plate body zone based on the area occupied by the corner fold can make the corner fold detection result more in line with the practical application requirements. This is because a corner fold with an area smaller than the preset area threshold has small influence on the operation of the cell assembly. In addition, the foregoing embodiment solution can also avoid false detection of a corner fold, thereby reducing the waste of production materials.

According to an aspect of this application, an apparatus for corner fold detection on a cathode electrode plate of a composite material strip is provided, including: an image acquisition module for acquiring a to-be-inspected image of a composite material strip by using an image acquisition unit, where the to-be-inspected image includes an electrode plate body zone of the cathode electrode plate; an extraction module, where the extraction module is configured to extract the electrode plate body zone from the to-be-inspected image; and a detection module, where the detection module is configured to perform corner fold detection on the electrode plate body zone. This embodiment solution can obtain same technical effects as the foregoing method.

According to an aspect of this application, an electronic device is provided, including at least one processor and a memory in communication connection with the at least one processor, where the memory has stored thereon instructions executable by the at least one processor, and when the instructions are executed by the at least one processor, the at least one processor is enabled to perform the foregoing method. This embodiment solution can obtain same technical effects as the foregoing method.

According to an aspect of this application, a system for corner fold detection on a cathode electrode plate of a composite material strip is provided, including: an image acquisition unit for acquiring a to-be-inspected image of the composite material strip; and the electronic device according to the foregoing aspect, where the electronic device is connected to the image acquisition unit. In this embodiment solution, the electrode plate of the composite material strip can be inspected in real time for a corner fold in the lamination process, which is beneficial for relevant personnel to adjust relevant components of the laminator in a timely manner, thereby reducing waste of production materials and improving the equipment efficiency of the laminator. In addition, the accuracy of corner fold detection on the electrode plate can be improved, thereby effectively controlling the outflow of cell assemblies with a corner fold on the electrode plate.

In some embodiments, the to-be-inspected image includes a first image of a first surface of the composite material strip and a second image of a second surface of the composite material strip opposite to the first surface, where the image acquisition unit includes: a first image acquisition unit for acquiring the first image of the first surface of the composite material strip; and a second image acquisition unit for acquiring the second image of the second surface of the composite material strip. With this embodiment solution, images of each side of the composite material strip can be acquired, so that the cathode electrode plate on each side of the composite material strip can be detected.

In some embodiments, the first image acquisition unit is a first line scan camera and the second image acquisition unit is a second line scan camera, where the system further includes a first line light source for providing illumination to an image acquisition region of the first line scan camera and a second line light source for providing illumination to an image acquisition region of the second line scan camera. A line scan camera is more suitable for a scenario in which there is relative movement between an object under measurement and the camera, and can achieve higher resolution and a wider imaging field of view. Line light sources are used to provide illumination, improving the efficiency and accuracy of corner fold detection.

In some embodiments, the system according to the foregoing aspect further includes: a first backup roller and a first encoder connected to the first backup roller, where the first backup roller abuts against the first surface of the composite material strip, and the first encoder is configured to send a pulse signal to the first line scan camera as the composite material strip moves on the first backup roller, to trigger the first line scan camera to take pictures line by line; and a second backup roller and a second encoder connected to the second backup roller, where the second backup roller abuts against the second surface of the composite material strip, and the second encoder is configured to send a pulse signal to the second line scan camera as the composite material strip moves on the second backup roller, to trigger the second line scan camera to take pictures line by line. The first backup roller and the second backup roller can tighten the composite material strip, which is beneficial to accurately capturing the image of the composite material strip, improving the accuracy of defect detection.

In some embodiments, a tangent position between the composite material strip and the first backup roller is located within the image acquisition region of the first line scan camera, and a tangent position between the composite material strip and the second backup roller is located in the image acquisition region of the second line scan camera. This solution facilitates the installation and alignment of the line scan cameras and the line light sources, thereby facilitating the precise installation of the line scan cameras and the line light sources and in turn facilitating the improvement of the accuracy of defect detection.

According to an aspect of this application, a laminator is provided, including the system according to the foregoing aspect. In this embodiment solution, the electrode plate of the composite material strip can be inspected in real time for a corner fold in the lamination process, which is beneficial for relevant personnel to adjust relevant components of the laminator in a timely manner, thereby reducing waste of production materials and improving the equipment efficiency of the laminator. In addition, the accuracy of corner fold detection on the electrode plate can be improved, thereby effectively controlling the outflow of cell assemblies with a corner fold on the electrode plate.

According to an aspect of this application, a computer-readable storage medium having stored thereon computer instructions is provided, where the computer instructions are configured to enable a computer to perform the method according to the foregoing aspect.

According to an aspect of this application, a computer program product is provided, including a computer program, where when the computer program is executed by a processor, the method according to the foregoing aspect is implemented.

In the foregoing embodiments of this application, the cathode electrode plate of the composite material strip can be inspected in real time for a corner fold in the lamination process, which is beneficial for relevant personnel to adjust relevant components of the laminator in a timely manner, thereby reducing waste of production materials and improving the equipment efficiency of the laminator. In addition, the accuracy of corner fold detection on the electrode plate can be improved, thereby effectively controlling the outflow of cell assemblies with a corner fold on the cathode electrode plate.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

In the accompanying drawings, unless otherwise specified, the same reference signs throughout a plurality of accompanying drawings indicate the same or similar components or elements. The accompanying drawings are not necessarily drawn to scale. It should be understood that these drawings depict only some implementations disclosed in this application and should not be considered as a limitation on a scope of this application.
FIG. 1 is a schematic diagram of a disassembled structure of a laminated cell assembly;
FIG. 2 is a structural block diagram of a laminator of related art;
FIG. 3 is a schematic structural diagram of a system for corner fold detection on an electrode plate of a composite material strip according to some embodiments of this application;
FIG. 4 is a schematic diagram of a to-be-inspected image according to some embodiments of this application;
FIG. 5 is a schematic flowchart of a method for corner fold detection on an electrode plate of a composite material strip according to some embodiments of this application;
FIG. 6 is a schematic flowchart for extracting an electrode plate body zone from a to-be-inspected image according to some embodiments of this application;
FIG. 7 is a schematic flowchart for determining a plurality of corner inspection zones and detecting a corner fold in the corner inspection zones according to some embodiments of this application;
FIG. 8 is a schematic flowchart of a method for corner fold detection on an electrode plate of a composite material strip according to some embodiments of this application;
FIG. 9 is a structural block diagram of an apparatus for corner fold detection on an electrode plate of a composite material strip according to some embodiments of this application; and
FIG. 10 is a structural block diagram of a laminator according to some embodiments of this application.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include", "comprise", and "have" and any other variations thereof in the specification, claims and brief description of drawings of this application are intended to cover non-exclusive inclusions.

In the description of the embodiments of this application, the terms "first", "second", and the like are merely intended to distinguish between different objects, and shall not be understood as any indication or implication of relative importance or any implicit indication of the number, sequence or primary-secondary relationship of the technical features indicated. In the description of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of only A, presence of both A and B, and presence of only B. In addition, the character "/" in this specification generally indicates an "or" relationship between contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitations on embodiments of this application.

In the description of the embodiments of this application, unless otherwise specified and defined explicitly, the terms "mount", "connect", "join", and "fasten" should be understood in their general senses. For example, they may refer to a fixed connection, a detachable connection, or an integral connection, may refer to a mechanical connection or electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

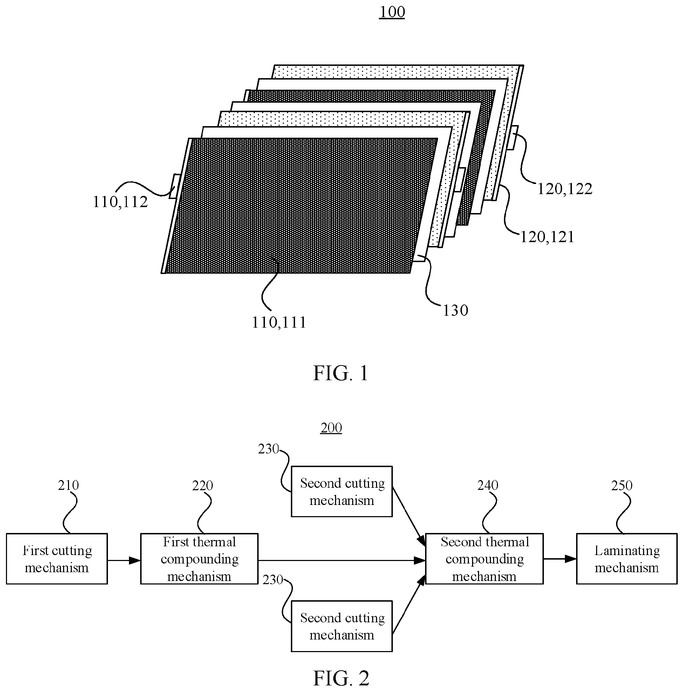

As shown in FIG. 1, a laminated cell assembly 100 includes a plurality of anode electrode plates 110 and a plurality of cathode electrode plates 120 alternately arranged, and separators 130 disposed between any adjacent anode electrode plate 110 and cathode electrode plate 120. The anode electrode plate 110 includes an anode electrode plate body 111 provided with an active substance and an anode tab 112 without an active substance layer, and the cathode electrode plate 120 includes a cathode electrode plate body 121 provided with an active substance and a cathode tab 122 without an active substance layer. Inside a lithium-ion battery cell (hereinafter referred to as a battery cell), the laminated cell assembly 100 is infiltrated by an electrolyte, and lithium ions move between a positive electrode and a negative electrode of the battery cell with the electrolyte as a medium, so that the battery cell can be charged and discharged. The function of the separator 130 is to allow lithium ions to pass through freely but not electrons, so as to prevent short circuit between the positive electrode and the negative electrode of the battery cell through the electrolyte.

The lamination process for the laminated cell assemblies is mainly carried out in a laminator. As shown in FIG. 2, in the related art, a laminator 200 includes a first cutting mechanism 210, a first thermal compounding mechanism 220, two second cutting mechanisms 230, a second thermal compounding mechanism 240, and a laminating mechanism 250 that are arranged in sequence. The first cutting mechanism 210 is used to cut out anode electrode plates from an anode electrode plate material strip. The first thermal compounding mechanism 220 is used to thermally compound a first separator and a second separator with two side surfaces of the anode electrode plate material strip to form a primary composite material strip. The two second cutting mechanisms 230 are used to cut out first cathode electrode plates and second cathode electrode plates from a first cathode electrode plate material strip and a second cathode electrode plate material strip in one-to-one correspondence. The second thermal compounding mechanism 240 is used to alternately thermally compound the first cathode electrode plate and the second cathode electrode plate with two side surfaces of the primary composite material strip to form a secondary composite material strip. The laminating mechanism 250 is used to laminate and cut the composite material strip to form a laminated assembly.

In the related art, quality inspection of a laminated cell assembly is conducted after the lamination process. Generally, an X-ray imager is used to scan around the laminated cell assembly, and then it is determined based on a scan image whether there is any drop, damage, wrinkle, or deformation of an active substance of an electrode plate in the laminated cell assembly, as well as any differences in related size information. The working principle of X-ray imager is as follows: When X-rays irradiate a sample, their transmission intensity is related to not only the energy of the X-rays but also the substance density and thickness of a sample material. X-rays can more easily penetrate through a sample with a smaller substance density and a thinner thickness. After the X-rays irradiate the sample, the transmission intensity of the X-rays is converted into an image by an image reception and conversion apparatus using differences between light and dark in grayscale contrast, thus forming an X-ray scan image. The foregoing X-ray inspection of the cell assembly is carried out after the lamination process and the entire cell assembly is scanned. Therefore, defects of the electrode plates in the lamination process cannot be detected in real time, and defect feedback is lagging, resulting in low detection efficiency and accuracy. In addition, in the related art, the detection of defects in the electrode plate is mainly carried out on the incoming materials of the electrode plate before the lamination process, which leads to low detection efficiency and accuracy.

The applicant of this application has noted that in the compounding process of the electrode plate and the separator and when the composite material strip is conveyed in the laminator, due to the presence of auxiliary mechanisms such as driving rollers, rolling rollers, and the backup rollers, the electrode plate in the composite material strip is prone to corner fold. Although some issues can be detected in the solution of inspecting electrode plates of a laminated cell assembly in the related art, due to the detection feedback lag and the inability to monitor the lamination process, when a corner fold is detected on an electrode plate, the laminator may have produced a large quantity of composite material strips with corner fold defects, resulting in a great waste of production materials. In addition, the inspection method using X-rays or the inspection of the incoming materials of electrode plates does not allow for thorough and effective inspection, resulting in low accuracy of corner fold detection. How a production yield of the laminated cell assemblies is improved has become an urgent technical problem to be resolved in the art.

Based on the foregoing technical issues detected and through in-depth research, the applicant provides a method, apparatus, and system for corner fold detection on an electrode plate of a composite material strip, an electronic device, a laminator, a computer-readable storage medium, and a computer program product, so as to quickly and accurately detect corner fold defects present on the electrode plates of the composite material strip, thereby improving the production yield of laminated cell assemblies.

The embodiment solution of this application is applied to a laminator, and is implemented at a composite material strip conveying stage after the composite material strip is formed and before a laminated assembly is formed. The embodiment solution of this application utilizes computer vision technology. Firstly, an image acquisition unit is used to acquire a to-be-inspected image of a composite material strip; secondly, an electrode plate body zone is extracted from the to-be-inspected image; and then, corner fold detection is performed on the electrode plate body zone. In the embodiment solution of this application, the cathode electrode plate of the composite material strip can be inspected for corner fold defects in the lamination process. As compared with the related art, this is beneficial for relevant personnel to adjust relevant components of the laminator in a timely manner, thereby reducing waste of production materials and improving the equipment efficiency of the laminator. In addition, the accuracy of corner fold detection on the electrode plate can be improved, thereby effectively controlling the outflow of cell assemblies with a corner fold on the cathode electrode plate.

The embodiments provided in this application can be used in the lamination process of laminated cell assemblies of various traction batteries or energy storage batteries.

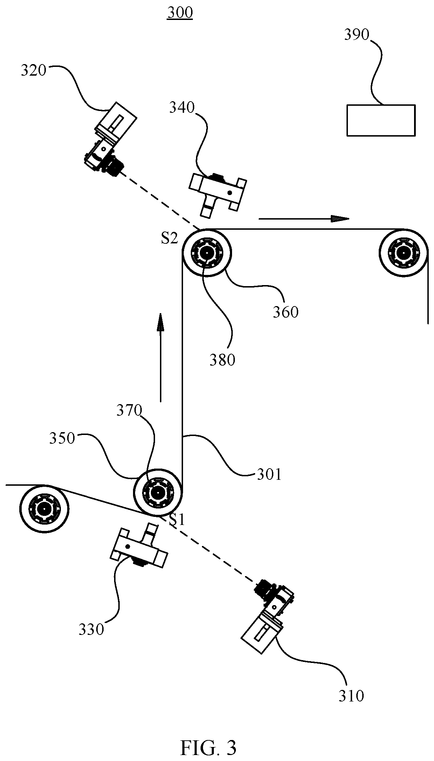

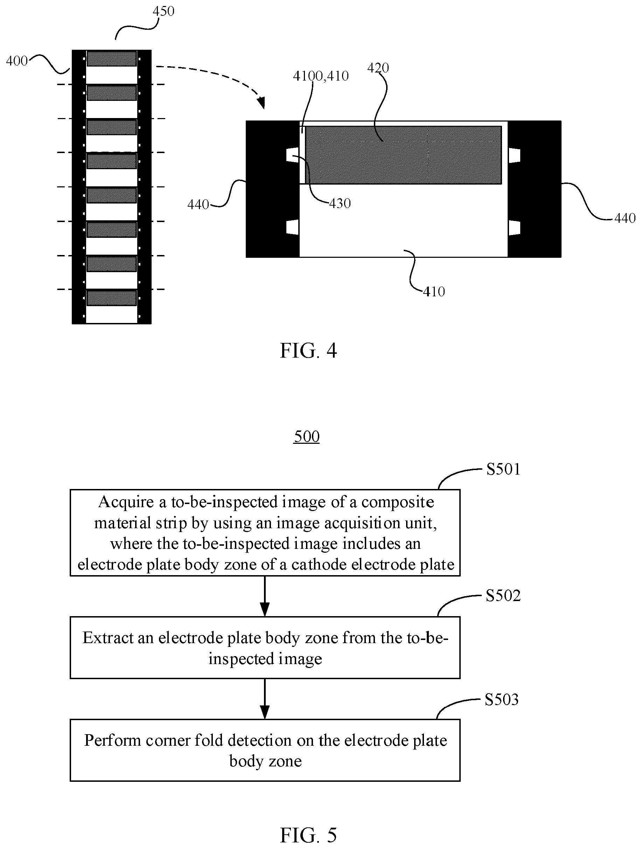

As shown in FIG. 3, a main hardware configuration of a system 300 for corner fold detection on a cathode electrode plate of a composite material strip (such as composite material strip 301 shown in FIG. 3) according to some embodiments of this application may include image acquisition units 310 and 320 and an electronic device 390. The image acquisition unit 310 is configured to acquire a to-be-inspected image of the composite material strip 301, and the electronic device 390 is connected to the image acquisition units 310 and 320. The electronic device 390 includes at least one processor and a memory in communication connection with the at least one processor, where the memory has stored thereon instructions executable by the at least one processor, and when the instructions are executed by the at least one processor, the at least one processor is enabled to perform the method 500 (as shown in FIG. 5, which is described in detail below) for corner fold detection on a cathode electrode plate of a composite material strip.

The electronic device 390 may be in wired connection or wireless connection with the image acquisition units 310 and 320. Since the main target of image acquisition by the image acquisition units 310 and 320 is the composite material strip 301, the image acquisition units 310 and 320 can be arranged at appropriate positions between a second thermal compounding mechanism and a laminating mechanism of a laminator. The image acquisition units 310 and 320 are not limited to specific types. A conventional area array industrial camera or a line scan camera may be used.

In the foregoing embodiment solution, the cathode electrode plate of the composite material strip can be inspected in real time for a corner fold in the lamination process, which is beneficial for relevant personnel to adjust relevant components of the laminator in a timely manner to prevent the electrode plate from generating a corner fold defect again in the lamination process, thereby reducing waste of production materials and improving the equipment efficiency of the laminator. In addition, the accuracy of corner fold detection on the electrode plate can be improved, thereby effectively controlling the outflow of cell assemblies with a corner fold on the cathode electrode plate.

According to some embodiments of this application, the to-be-inspected image includes a first image of a first surface of the composite material strip 301 and a second image of a second surface of the composite material strip opposite to the first surface, where the image acquisition units 310 and 320 may include a first image acquisition unit 310 and a second image acquisition unit 320. The first image acquisition unit 310 is configured to acquire a first image of the first surface of the composite material strip 301. The second image acquisition unit 320 is configured to acquire a second image of the second surface of the composite material strip 301.

The electronic device 390 may be in wired connection or wireless connection with the first image acquisition unit 310 and the second image acquisition unit 320. The first image acquisition unit 310 and the second image acquisition unit 320 may be arranged at appropriate positions between the second thermal compounding mechanism and the laminating mechanism of the laminator. The first image acquisition unit 310 and the second image acquisition unit 320 are not limited to specific types. A conventional area array industrial camera or a line scan camera may be used.

With this embodiment solution, images of each side of the composite material strip can be acquired, so that the cathode electrode plate on each side of the composite material strip can be detected.

In some embodiments of this application, the first image acquisition unit 310 is a first line scan camera and the second image acquisition unit 320 is a second line scan camera. The system 300 further includes a first line light source 330 for providing illumination to an acquisition zone of the first line scan camera and a second line light source 340 for providing illumination to an acquisition zone of the second line scan camera.

The first line light source 330 and the second line light source 340 are configured to provide illumination for their corresponding line scan cameras. Taking the first line light source 330 and the first line scan camera as an example, their relative installation positions should satisfy that a narrow bright strip formed by the first line light source 330 focused on the composite material strip 301 should be parallel to a sensor of the first line scan camera, so that the line scan camera can obtain better shooting quality. The first line light source 330 and the second line light source 340 are not limited to specific types, and may be, for example, LED light sources, halogen lamps, or high-frequency fluorescent lamps.

A line scan camera, also known as linear camera, is used in scenarios in which there is relative movement between an object under measurement and the camera, and can achieve higher resolution and a wider imaging field of view. Theoretically, an infinite continuous image can be obtained by acquiring image information of a moving object under measurement line by line. Through intelligent software processing, image slices (that is, to-be-inspected images) can be intercepted from continuous images, and an electronic device can process the to-be-inspected images in real time or store them in a cache for later processing. The images obtained using the line scan cameras and the line light sources can increase the image resolution and expand the imaging field of view, thereby improving the efficiency and accuracy of corner fold detection.

In some embodiments of this application, as shown in FIG. 3, the system 300 may further include a first backup roller 350, a first encoder 370 connected to the first backup roller 350, a second backup roller 360, and a second encoder 380 connected to the second backup roller 360. The first backup roller 350 abuts against the first surface of the composite material strip 301, and the first encoder 370 is configured to send a pulse signal to the first line scan camera as the composite material strip 301 moves on the first backup roller 350, to trigger the first line scan camera to take pictures line by line. The second backup roller 360 abuts against the second surface of the composite material strip 301, and the second encoder 380 is configured to send a pulse signal to the second line scanner as the composite material strip 301 moves on the second backup roller 360, to trigger the second line scan camera to take pictures line by line.

The encoder can convert angular displacement into pulse signals. Taking the first backup roller 350 as an example, when the first backup roller 350 rotates continuously, the encoder sends out a pulse signal for each unit angle of rotation, which triggers the first line scan camera to perform one-line scanning on the first surface of the composite material strip 301.

The first backup roller 350 and the second backup roller 360 can tighten the composite material strip 301, which is beneficial to accurately capturing the image of the composite material strip 301, improving the accuracy of defect detection.

In some embodiments of this application, as shown in FIG. 3, a tangent position S1 between the composite material strip 301 and the first backup roller 350 is located within the image acquisition region of the first line scan camera, and a tangent position S2 between the composite material strip 301 and the second backup roller 360 is located in the image acquisition region of the second line scan camera.

The tangent position S1 between the composite material strip 301 and the first backup roller 350 can be any of the two tangent positions, and the tangent position S1 can be located in the middle of the image acquisition region of the first line scan camera or any position in the image acquisition region of the first line scan camera. The tangent position S2 of the composite material strip 301 and the second backup roller 360 can be any one of the two tangent positions, and the tangent position S2 can be located in the middle of the image acquisition region of the second line scan camera or any position in the image acquisition region of the second line scan camera.

Taking the first backup roller 350 as an example, the image acquisition region of the first line scan camera is provided at the tangent position between the composite material strip 301 and the first backup roller 350, which facilitates the installation and alignment of the first line scan camera (the first image acquisition unit 310) and the first line light source 330, thereby facilitating the precise installation of the first line scan camera and the first line light source 330 and in turn facilitating the improvement of the accuracy of defect detection.

In some embodiments of this application, based on image information acquired by the first image acquisition unit 310 and the second image acquisition unit 320, corner fold detection may be performed on the electrode plate on each side surface of the composite material strip 301, and a detection result can be output.

In some embodiments of this application, as shown in FIG. 3, the system 300 may include a first line scan camera, a second line scan camera, a first line light source 330 for providing illumination to an acquisition zone of the first line scan camera, a second line light source 340 for providing illumination to an acquisition zone of the second line scan camera, a first backup roller 350, a first encoder 370 connected to the first backup roller 350, a second backup roller 360, a second encoder 380 connected to the second backup roller 360, and an electronic device 390. The first line scan camera is used to acquire image information of a to-be-inspected image of a first surface of the composite material strip 301, and the second line scan camera is used to acquire image information of a second surface of the composite material strip 301 opposite to the first surface. The first backup roller 350 abuts against the first surface of the composite material strip 301, and the first encoder 370 is configured to send a pulse signal to the first line scan camera as the composite material strip 301 moves on the first backup roller 350, to trigger the first line scan camera to take pictures line by line. The second backup roller 360 abuts against the second surface of the composite material strip 301, and the second encoder 380 is configured to send a pulse signal to the second line scanner as the composite material strip 301 moves on the second backup roller 360, to trigger the second line scan camera to take pictures line by line. A tangent position S1 between the composite material strip 301 and the first backup roller 350 is located within the image acquisition region of the first line scan camera, and a tangent position S2 between the composite material strip 301 and the second backup roller 360 is located in the image acquisition region of the second line scan camera. The electronic device 390 is connected to the first line scan camera and the second line scan camera, respectively.

As shown in FIG. 4, in an embodiment of this application, for each side surface of the composite material strip 301, to-be-inspected images 400 can be sequentially and continuously intercepted from continuous images 450 acquired by the first line scan camera and the second line scan camera, and then corner fold detection and analysis are performed on the cathode electrode plates of the composite material strip 301 by using the to-be-inspected images 400. As an intercepted unit, each to-be-inspected image 400 may include a separator zone 410, an electrode plate body zone 420 surrounded by the separator zone 410, and a plurality of tab protruding zones 430 protruding from the separator zone 410. In addition, the to-be-inspected image 400 may further include images of other objects other than the composite material strip 301, such as images of the first backup roller 350 and the second backup roller 360 corresponding to the backup roller zone 440 in the to-be-inspected image 400.

In some embodiments, the electrode plate body zone 420 is a body zone of the cathode electrode plate on the composite material strip 301. Because the anode electrode plate is sandwiched between two separators, its body zone is not visible in the to-be-inspected image 400, but the tab protruding zones 430 protruding from the separator zone 410 can be seen in the to-be-inspected image 400.

It should be noted that the to-be-inspected image 400 may further include a tab and separator overlapping zone 4100 connected between the electrode plate body zone 420 and the tab protruding zone 430, and an entirety of the tab and separator overlapping zone 4100 and the tab protruding zone 430 corresponds to the tab of the electrode plate on the composite material strip. An entirety of the electrode plate body zone 420, the tab and separator overlapping zone 4100, and the tab protruding zone 430 corresponds to one electrode plate on the composite material strip 301. Generally, the tab of the electrode plate is not provided with an active substance layer, and a part of the electrode plate corresponding to the tab protruding zone 430 exposes a current collector of a metal material, and a part of the electrode plate corresponding to the tab and separator overlapping zone 4100 can expose the current collector of a metal material or be provided with a light-colored insulating layer (such as a white insulating layer). Generally, a grayscale of the current collector of a metal material or the light-colored insulating layer in the to-be-inspected image 400 is not lower than that of the separator zone 410. Therefore, in some embodiments of this application, to simplify the calculation, the tab and separator overlapping zone 4100 can be included into the separator zone 410, so that the inspection region of the electrode plate does not include the tab and separator overlapping zone 4100.

As shown in FIG. 5, a method 500 for corner fold detection on a cathode electrode plate of a composite material strip (such as composite material strip 301 shown in FIG. 3) according to some embodiments of this application may include the following steps S501 to S503.

In step S501, an image acquisition unit is used to acquire a to-be-inspected image 400 of the composite material strip 301, the to-be-inspected image 400 including an electrode plate body zone 420 of the cathode electrode plate.

In step S502, an electrode plate body zone 420 is extracted from the to-be-inspected image 400.

In step S503, corner fold detection is performed on the electrode plate body zone 420.

The image acquisition unit may be the first image acquisition unit 310 and/or the second image acquisition unit 320 as shown in FIG. 3 and is not limited to specific types. A conventional area array industrial camera or a line scan camera may be used. A line scan camera, also known as linear camera, is used in scenarios in which there is relative movement between an object under measurement and the camera, and can achieve higher resolution and a wider imaging field of view. Theoretically, an infinite continuous image can be obtained by acquiring image information of a moving object under measurement line by line.

As shown in FIG. 4, the to-be-inspected image 400 may be an intercepted unit of continuous images 450 of the composite material strip 301, or may be obtained from images shot by an area array industrial camera. This is not specifically limited in this application. The to-be-inspected image 400 includes at least an electrode plate body zone 420. In addition, the to-be-inspected image 400 may further include a separator zone 410 at least partially surrounding the electrode plate body zone 420, a backup roller zone 440 at least partially surrounding the separator zone 410, a tab and separator overlapping zone 4100, and tab protruding zones 430 located at two sides of the separator zone 410. In some embodiments of this application, to simplify the calculation, as mentioned above, the tab and separator overlapping zone 4100 can be included into the separator zone 410.

In the method 500 of the embodiments of this application, a cathode electrode plate of the composite material strip can be inspected in real time for a corner fold in the lamination process, which is beneficial for relevant personnel to adjust relevant components of the laminator in a timely manner to prevent the electrode plate from generating a corner fold defect again in the lamination process, thereby reducing waste of production materials and improving the equipment efficiency of the laminator. In addition, the method 500 can also improve the accuracy of corner fold detection on the electrode plate, thereby effectively controlling the outflow of cell assemblies with a corner fold on the cathode electrode plate.

In some embodiments of this application, step S501 may include: acquiring continuous images 450 shot by a line scan camera for each side surface of the composite material strip 301; and intercepting a to-be-inspected image from the continuous images 450 based on an image segmentation algorithm.

In these embodiments, the to-be-inspected image can be intercepted from the continuous images 450 shot by the line scan camera based on the image segmentation algorithm. The image segmentation algorithm is not limited to a specific type. For example, the algorithm may be a threshold-based segmentation algorithm, a region-based segmentation algorithm, an edge-based segmentation algorithm, or a specific theory-based segmentation algorithm. Referring to FIG. 4, in some embodiments of this application, a threshold-based segmentation method is used to find the edge of the electrode plate body zone 420 along width direction of the composite material strip 301 based on grayscale differences between the electrode plate body zone 420 and the separator zone 410. Then, based on the edges of two adjacent electrode plate body zones 420 in the width direction of the composite material strip 301, the continuous image 450 is segmented along the width direction of the composite material strip 301 (the segmentation line can avoid the electrode plate body zone 420 and be spaced apart from the electrode plate body zone 420 by several rows of pixels) to obtain the to-be-inspected image 400.

In some embodiments of this application, step S502 may include extracting the electrode plate body zone 420 from the to-be-inspected image at least based on a first pixel value range of the electrode plate body zone 420.

The electrode plate body zone 420 is extracted based on pixel value differences between zones of the to-be-inspected image 400. The to-be-inspected image 400 may be a black-and-white image or a color image (for example, an RGB image) and this application is not limited thereto. When the to-be-inspected image 400 is a black-and-white image, the pixel values of the pixels in the image may be grayscale values, which divide white and black into several levels according to a logarithmic relationship, with a general range of 0 to 255, where white is 255 and black is 0. In some examples, when the to-be-inspected image 400 is a color image, a black-and-white image can be obtained by performing grayscale binarization on the color image. In some other examples, the color image may not be processed, and in this case, pixel values may be the brightness values of individual color channels of the color image. For example, the pixel value of each pixel in an RGB image may include a brightness value of each color channel, that is, red (R), green (G) or blue (B), which generally ranges from 0 to 255, with the brightest being 255 and the darkest being 0. The first pixel threshold range may be determined according to experience or battery production process specifications. For example, the first pixel threshold range may be set based on a grayscale value range of the electrode plate body zone 420 imaged under same illumination conditions.

In some examples, the electrode plate body zone 420 can be directly extracted from the to-be-inspected image based on the first pixel threshold range of the electrode plate body zone 420. Alternatively, based on the first pixel threshold range of the electrode plate body zone 420, regions that do not fall within the first pixel threshold range can be first removed from the to-be-inspected image to obtain the electrode plate body zone 420.

With the foregoing embodiment solution, the electrode plate body zone can be quickly and effectively extracted, thereby improving the accuracy of corner fold detection.

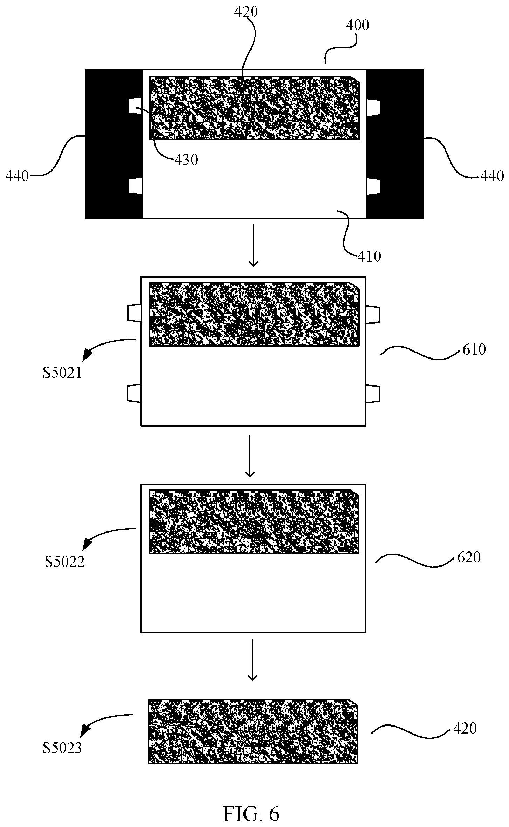

In some embodiments of this application, as shown in FIG. 6, when the to-be-inspected image 400 further includes a separator zone 410 surrounding the electrode plate body zone 420 (the tab and separator overlapping zone 4100 is included into the separator zone 410), a backup roller zone 440 at least partially surrounding the separator zone 410, and a plurality of tab protruding zones 430 located at two sides of the separator zone 410, the extracting the electrode plate body zone 420 from the to-be-inspected image at least based on a first pixel value range of the electrode plate body zone 420 may include the following substeps S5021 and S5023.

In substep S5021, based on a corresponding second pixel threshold range of the backup roller zone 440, the backup roller zone 440 is removed from the to-be-inspected image 400 to obtain a first intermediate image 610.

In substep S5022, an image of a maximum rectangular region inscribed in an edge of the first intermediate image 610 is extracted from the first intermediate image 610 as a second intermediate image 620, to remove the plurality of tab protruding zones 430.

In substep S5023, the electrode plate body zone 420 is extracted from the second intermediate image 620 based on the corresponding first pixel threshold range of the electrode plate body zone 420.

The electrode plate body zone 420 is extracted based on pixel value differences between zones of the to-be-inspected image 400. The second pixel threshold range may be determined according to experience or battery production process specifications. For example, the second pixel threshold range may be set based on a grayscale value range of the backup roller zone 440 imaged under same illumination conditions. In some examples, the backup roller zone 440 has a maximum pixel threshold, and alternatively, the backup roller zone 440 may be removed from the to-be-inspected image 400 based on the maximum pixel threshold.

In some embodiments, in combination with the grayscale differences between the backup roller zone 440 and other regions, the Blob algorithm can be used to remove the backup roller zone 440 from the to-be-inspected image 400, that is, to remove feature regions with grayscale values within the first pixel threshold range of the backup roller zone 440. In computer vision, Blob refers to a connected region in an image, and Blob analysis is to extract and mark the connected region of a binary image after foreground/background separation. The core idea of the Blob algorithm is to find out a range of "grayscale mutation" in a region, so as to determine its size, shape, area, and the like.

Specifically, for example, in substep S5021, firstly, grayscale binarization is performed on the to-be-inspected image 400; next, based on the first pixel threshold range of the backup roller zone 440, a feature region with grayscale values within the first pixel threshold range of the backup roller zone 440 is extracted from the grayscale binarized image; next, based on the connection operator (connection operator) of machine vision software (such as halcon software), the feature region is segmented to separate non-adjacent regions to form their respective connected zones; next, based on the select_shape operator (filter operator) of the machine vision software, a connected zone (corresponding to the backup roller zone 440) with an area larger than a preset area threshold is screened out; and then, based on the difference operator (subtraction operator) of the machine vision software, the backup roller zone 440 is removed from the to-be-inspected image 400 to obtain the first intermediate image 610.

In substep S5022, a maximum rectangle inscribed with the first intermediate image 610 can be calculated based on the inner_rectangle1 operator (inscribed rectangle operator) of the machine vision software, and a region with the maximum inscribed rectangle (that is, the maximum rectangular region) can be intercepted as the second intermediate image 620.

In substep S5023, firstly, grayscale binarization is performed on the second intermediate image 620, to extract therefrom a feature region with grayscale values within the second pixel threshold range of the electrode plate body zone 420; next, based on the opening_rectangle1 operator (opening operator) of the machine vision software, an open operation (an operation of erosion followed by dilation is called an opening operation, which serves to remove noise and smoothen boundaries) and a closing operation (an operation of dilation followed by erosion is called a closing operation, which serves to merge subtle connections) are performed on the feature region; then, based on the connection operator (connection operator) of the machine vision software, the feature region is segmented to separate non-adjacent regions to form their respective connected zones; and then, based on the select_shape operator (filter operator) of the machine vision software, a connected zone with the largest area and the largest rectangularity is screened out, that is, the electrode plate body zone 420 is screened out.

Because there are certain differences in pixel values of the electrode plate body zone 420, the separator zone 410, the backup roller zone 440, and the tab protruding zones 430, the foregoing embodiment solution can quickly and effectively extract the electrode plate body zone 420, thereby improving the accuracy of corner fold detection.

In some embodiments of this application, step S503 may include: determining a plurality of corner inspection zones Q1, Q2, Q3, and Q4 based on the electrode plate body zone 420, where each corner inspection zone includes a corresponding one of a plurality of corner points p1, p2, p3, and p4 of the electrode plate body zone 420, the plurality of corner points p1, p2, p3, and p4 being formed by intersection of every two adjacent ones of a plurality of edge lines b1, b2, b3, and b4 of the electrode plate body zone 420; and performing corner fold detection on the plurality of corner inspection zones Q1, Q2, Q3, and Q4.

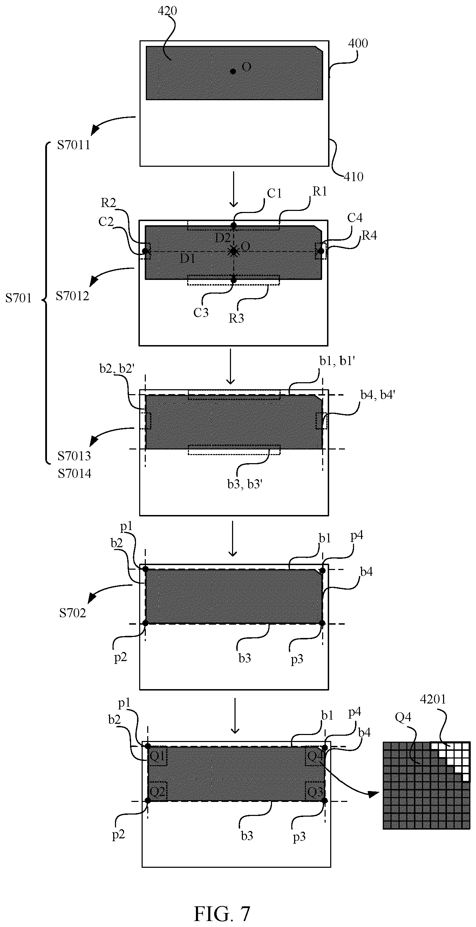

As shown in FIG. 7, the extracted electrode plate body zone 420 may include the plurality of edge lines b1, b2, b3, and b4, and adjacent ones of the plurality of edge lines b1, b2, b3, and b4 intersect to form the plurality of corner points p1, p2, p3, and p4 of the electrode plate body zone 420. For example, adjacent edge lines b1 and b2 intersect to form a corner point p1. Corresponding corner inspection zones Q1, Q2, Q3, and Q4 are formed at each of the plurality of corner points p1, p2, p3, and p4. The shapes of the plurality of corner inspection zones Q1, Q2, Q3, and Q4 may be square, circle, ellipse, irregular polygon, or the like, and this application is not limited thereto. In some examples, the area of the corner inspection zone can be determined according to production process specifications. For example, in a battery production process, an electrode plate with a corner fold of which the area is larger than a preset area threshold (for example, 2 square millimeters) is specified as an abnormal electrode plate, and in this case, the area of a corner inspection zone can be set to 2 to 3 times the preset area threshold.

The foregoing embodiment solution can narrow the inspection range, thereby effectively reducing the calculation for inspection and improving the inspection efficiency. In addition, narrowing the inspection range can also avoid interference from other regions, thereby effectively avoiding false detection and improving the accuracy of corner fold detection.

In some embodiments of this application, as shown in FIG. 7, each corner inspection zone is located in a region enclosed by the plurality of edge lines b1, b2, b3, and b4 of the electrode plate body zone 420, and a corresponding one of the plurality of corner points p1, p2, p3, and p4 is used as one vertex of the corner inspection zone.

As shown in FIG. 7, taking the corner inspection zone Q1 as an example, the corner inspection zone Q1 is located in a region enclosed by the plurality of edge lines b1, b2, b3, and b4, and takes the corner point p1 as one of its vertices.

The foregoing embodiment solution can define the corner inspection zones more accurately to further narrow the inspection range, thereby more effectively reducing the calculation for inspection and improving the accuracy of corner fold detection.

In some embodiments of this application, the determining a plurality of corner inspection zones Q1, Q2, Q3, and Q4 based on the electrode plate body zone 420 includes: determining the plurality of corner points p1, p2, p3, and p4 of the electrode plate body zone 420; and based on each corner point and its corresponding two adjacent edge lines, determining a corner inspection zone corresponding to the corner point.

Taking the corner point p1 as an example, for example, the corner inspection zone Q1 determined based on the corner point p1 and its two adjacent edge lines b1 and b2 may take the corner point p1 as a vertex, and two sides on the vertex coincide with the edge lines b1 and b2, respectively. For another example, the determined corner inspection zone Q1 may take the corner point p1 as a vertex and surround parts of the edge lines b1 and b2 within it. For another example, the determined corner inspection zone Q1 can surround the corner point p1 and parts of the edge lines b1 and b2 within it, and this disclosure is not limited thereto.

The foregoing embodiment solution can define the corner inspection zones more accurately to further narrow the inspection range, thereby more effectively reducing the calculation for inspection and improving the accuracy of corner fold detection.

In some embodiments of this application, the determining the plurality of corner points p1, p2, p3, and p4 of the electrode plate body zone 420 may include: determining a minimum rectangular region circumscribing the electrode plate body zone 420; and determining four vertices of the minimum rectangular region as the plurality of corner points p1, p2, p3, and p4.

For example, based on the smallest_rectangle1 operator (minimum circumscribed rectangle operator) of the machine vision software, the minimum circumscribed rectangular region of the electrode plate body zone 420 can be calculated, and four vertices of the minimum rectangular region can be obtained.

The foregoing embodiment solution can quickly and accurately locate the corner points of the electrode plate body zone and accordingly determine a corner inspection zone, thereby contributing to quick and accurate corner fold detection.

In some other embodiments of this application, as shown in FIG. 7, the determining the plurality of corner points p1, p2, p3, and p4 of the electrode plate body zone 420 may include the following steps S701 to S702.

In step S701, a plurality of edge lines b1, b2, b3, and b4 of the electrode plate body zone are determined.

In step S702, intersection points of every two adjacent ones of the plurality of edge lines b1, b2, b3, and b4 are determined as the plurality of corner points p1, p2, p3, and p4.

As shown in FIG. 7, in step S702, four intersection points of the determined plurality of edge lines b1, b2, b3, and b4 can be calculated based on the intersectin_lines operator (intersection point solving operator) of the machine vision software and used as the plurality of corner points p1, p2, p3, and p4.

The foregoing embodiment solution can more accurately locate the corner points of the electrode plate body zone and accordingly determine a corner inspection zone, thereby contributing to quick and accurate corner fold detection.

In some embodiments of this application, as shown in FIG. 7, step S701 may include the following substeps S7011 to S7014.

In substep S7011, position information of a center point O of the electrode plate body zone 420 is determined.

In substep S7012, based on the position information of the center point O and size information of a standard electrode plate, a plurality of edge detection zones R1, R2, R3, and R4 are formed in the to-be-inspected image 400, each edge detection zone corresponding to one of the plurality of edge lines b1, b2, b3, and b4.

In substep S7013, based on the plurality of edge detection zones R1, R2, R3, and R4, an edge detection algorithm is used to perform edge detection on the electrode plate body zone 420 to obtain a plurality of sidelines b1', b2', b3', and b4'.

In substep S7014, a plurality of edge lines b1, b2, b3, and b4 of the electrode plate body zone are generated based on the plurality of sidelines b1', b2', b3', and b4'.

The position information of the center point O may be, for example, coordinates of the center point O. The size information of the standard electrode plate may be theoretical length and width information of the standard electrode plate, or may be a deviation D2 between a theoretical center point of the standard electrode plate and upper and lower edges of the electrode plate and a deviation D1 between the theoretical center point of the standard electrode plate and left and right edges.

As shown in FIG. 7, substeps S7011 to S7014 may be executed using the following algorithm, for example: Firstly, coordinates (X0, Y0) of the center point O of the electrode plate body zone 420 are calculated based on the area_center operator (area center operator) of the machine vision software; next, based on the coordinates (X0, Y0) of the center point O and the size information of the standard electrode plate (for example, the deviation D2 between the theoretical center point and the upper and lower edges of the electrode plate and the deviation D1 between the theoretical center point and the left and right edges), coordinates (X1, Y1) of a center point C1 of the upper edge, coordinates (X2, Y2) of a center point C2 of the lower edge, coordinates (X3, Y3) of a center point C3 of the left edge, and coordinates (X4, Y4) of a center point C4 of the right edge are calculated, thereby determining coordinate information of a plurality of edge detection ROIs (in machine vision and image processing, regions that need to be processed are outlined in the form of squares, circles, ellipses, irregular polygons, or the like, and are called regions of interesting ROIs), that is, edge detection zones R1, R2, R3, and R4; then, based on the create_metrology_model operator (an operator that creates a metrology model) of the machine vision software, an edge detection model handle is created; based on the add_metrology_object_generic operator (an operator that adds a metrology object to a metrology model) of the machine vision software, the coordinate information of edge detection ROIs of four sidelines and edge detection parameters are added to an edge detection model in an order of left, right, up, and down; based on the apply_metrology_model operator (an operator that executes the metrology model) of the machine vision software, edge detection is performed; based on the get_metrology_object_result operator (an operator that obtains measurement results of the metrology model) of the machine vision software, a plurality of sidelines b1', b2', b3', and b4' are obtained; and then, based on the plurality of sidelines lines b1', b2', b3', and b4', a plurality of edge lines b1, b2, b3, and b4 of the electrode plate body zone 420 are generated.

The method of providing edge detection zones for edge detection can narrow the range of edge detection, thereby effectively reducing the calculation for edge detection, avoiding interference from other regions, and improving the accuracy of edge detection.

In some embodiments of this application, step S7014 may include: determining an angle of each of the plurality of sidelines b1', b2', b3', and b4' with respect to a corresponding edge line of the to-be-inspected image 400; and determining the sidelines as edge lines in response to the angle of each sideline being within a corresponding angle threshold range.

For example, based on the angle_lx operator (an operator that calculates an included angle between a straight line and a horizontal coordinate axis) of the machine vision software, included angles between the four sidelines b1', b2', b3', and b4' and a reference edge of the to-be-inspected image 400 are calculated, and whether the included angles are within a permissible range is determined. A corresponding edge line (that is, the reference edge) of the to-be-inspected image 400 may be at least one of an upper edge, a lower edge, a left edge, and a right edge of the to-be-inspected image 400. The angle threshold range may be set to, for example, 90°±t or 0°±t based on the reference edge of the to-be-inspected image 400. t refers to a permissible deviation, which can be determined according to experience or production process specifications, for example, 5°. For example, if the included angle between the sideline b2' and the upper edge of the to-be-inspected image 400 and the included angle between the sideline b4' and the upper edge of the to-be-inspected image 400 are in the range of 85° to 95°, and the included angle between the sideline b1' and the upper edge of the to-be-inspected image 400 and the included angle between the sideline b3' and the upper edge of the to-be-inspected image 400 are in the range of -5° to +5°, it is considered that the edge lines detected are correct. For another example, if the included angle between the sideline b2' and the left edge of the to-be-inspected image 400 and the included angle between the sideline b4' and the left edge of the to-be-inspected image 400 are in the range of -5° to +5°, and the included angle between the sideline b1' and the left edge of the to-be-inspected image 400 and the included angle between the sideline b3' and the left edge of the to-be-inspected image 400 are in the range of -95° to +95°, it is considered that the edge lines detected are correct. For another example, if the included angle between the sideline b2' and the left edge of the to-be-inspected image 400 and the included angle between the sideline b4' and the left edge of the to-be-inspected image 400 are in the range of -5° to +5°, and the included angle between the sideline b1' and the upper edge of the to-be-inspected image 400 and the included angle between the sideline b3' and the upper edge of the to-be-inspected image 400 are in the range of -5° to +5°, it is considered that the edge lines detected are correct. This application is not limited thereto.

The foregoing embodiment solution can determine whether a detected edge line is correct or not, so as to avoid that a wrongly determined corner inspection zone affects the accuracy of corner fold detection.

In some embodiments of this application, as shown in FIG. 7, the performing corner fold detection on the plurality of corner inspection zones Q1, Q2, Q3, and Q4 in step S503 may include: determining whether a pixel value of each pixel in each corner inspection zone is greater than a first pixel threshold; and determining that a corner fold is present in the electrode plate body zone 420 in response to a determination that pixel values of one or more pixels 4201 in at least one corner inspection zone Q4 are greater than the first pixel threshold.

The pixel values may be grayscale values in a black-and-white image or brightness values of individual color channels in a color picture. The first pixel threshold may be determined according to experience or battery production process specifications. In some embodiments, the first pixel threshold may be set based on pixel values of the electrode plate body zone 420 imaged under same illumination conditions. For example, grayscale values of the electrode plate body zone 420 for imaging are generally stable below 30 when the external light source is unchanged, and the first pixel threshold can be set to 30 in this case.

For example, as shown in FIG. 7, when the gray values of a plurality of pixels 4201 in the corner inspection zone Q4 are detected to be greater than the first pixel threshold, it can be preliminarily determined that a corner fold is present in the electrode plate body zone 420, so that the electrode plate can be detected for a corner fold quickly and accurately.

In some embodiments of this application, when the to-be-inspected image 400 further includes a separator zone 410 surrounding the electrode plate body zone 420, the determining that a corner fold is present in the electrode plate body zone 420 in response to a determination that pixel values of one or more pixels 4201 in at least one corner inspection zone Q4 are greater than a first pixel threshold may include: determining that a suspected corner fold is present in the electrode plate body zone 420 in response to a determination that the pixel values of one or more pixels 4201 in at least one corner inspection zone Q4 are greater than the first pixel threshold; extracting pixels with pixel values within a pixel threshold range of the separator zone 410 in at least one corner inspection zone Q4 to obtain a set of abnormal pixels; dividing the set of abnormal pixels into at least one independently connected abnormal pixel region; and determining that a corner fold is present in the electrode plate body zone 420 in response to an area of any abnormal pixel region being greater than a preset area threshold.

The pixel threshold range and area threshold of the separator zone 410 can be determined according to experience or battery production process specifications. For example, grayscale values of the separator zone 410 for imaging under same illumination conditions are in the range of 30 to 200, and the pixel threshold range of the separator zone 410 can be set to 30 to 200 in this case. According to battery production process specifications, for example, the area threshold can be set to 20 square millimeters.

The method in the foregoing embodiment may be executed using the following algorithm, for example: Firstly, based on the scale_image operator (an operator that performs scale operations on pixels in an image) of the machine vision software, the grayscale of the corner inspection zone is stretched to increase the grayscale difference; next, based on the threshold operator (threshold processing operator), a feature region with grayscale values within the pixel threshold range (for example, 30 to 200) of the separator zone 410 is extracted from the processed images using the Blob algorithm; next, based on the closing_rectangle1 operator (a morphological closing operator) of the machine vision software, a closing operation is performed on the extracted feature region to remove noise; next, based on the connection operator (connection operator) of the machine vision software, the feature region is segmented to separate non-adjacent regions to form their respective independently connected zones; and then, the area of each connected zone is calculated based on the area_center operator (area center operator) of the machine vision software, and whether there is a connected zone with an area greater than a preset area threshold (for example, set to 2 square millimeters) is determined. If yes, it is determined that the electrode plate body zone 420 has a corner fold.

The foregoing embodiment solution can make the corner fold detection result more in line with the practical application requirements. This is because a corner fold with an area smaller than the preset area threshold has small influence on the operation of the cell assembly. In addition, the foregoing embodiment solution can also avoid false detection of a corner fold, thereby reducing the waste of production materials.

In some embodiments of this application, the method 500 further includes outputting a detection result. The detection result output may include at least one of the following: positioning information of the to-be-inspected image 400 corresponding to the composite material strip 301, alarm information on the presence of a defect in the electrode plate, positioning information of a corner fold in the to-be-inspected image 400, and the like.

The positioning information of a corner fold in the to-be-inspected image 400 may be, for example, a frame line or an arrow indicating the position of the corner fold. The positioning information of the to-be-inspected image 400 corresponding to the composite material strip 301 may be, for example, a shooting code corresponding to the to-be-inspected image 400. The alarm information may be an alarm signal of sound, light or a combination of sound and light. The content of the detection result is not specifically limited in this application.

In some embodiments of this application, the method 500 further includes issuing an instruction of removing an electrode plate with a corner fold defect based on the detection result.

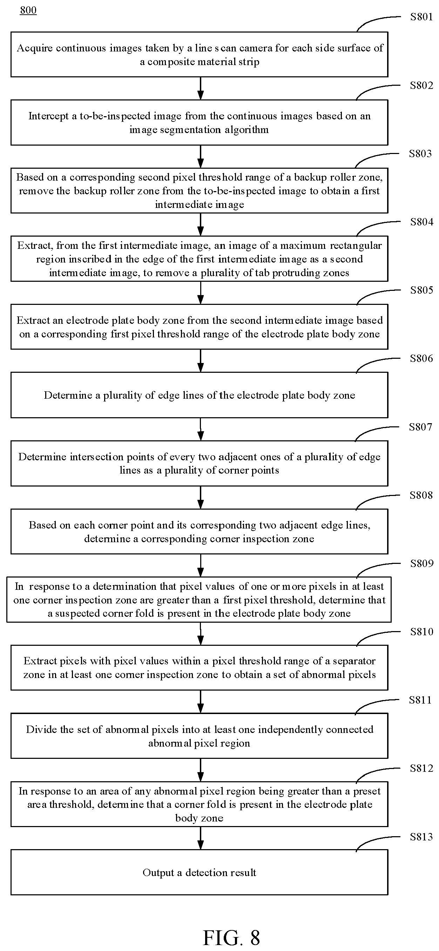

As shown in FIG. 8, a method 800 for corner fold detection on a cathode electrode plate of a composite material strip according to some embodiments of this application may include the following steps S801 to S811.

In step S801, continuous images taken by a line scan camera are acquired for each side surface of the composite material strip.

In step S802, a to-be-inspected image is intercepted from the continuous images based on an image segmentation algorithm.

In step S803, based on a corresponding second pixel threshold range of a backup roller zone, the backup roller zone is removed from the to-be-inspected image to obtain a first intermediate image.

In step S804, an image of a maximum rectangular region inscribed in an edge of the first intermediate image is extracted from the first intermediate image as a second intermediate image, to remove a plurality of tab protruding zones.

In step S805, an electrode plate body zone is extracted from the second intermediate image based on a corresponding first pixel threshold range of the electrode plate body zone.

In step S806, a plurality of edge lines of the electrode plate body zone are determined.

In step S807, intersection points of every two adjacent ones of a plurality of edge lines are determined as a plurality of corner points.

In step S808, based on each corner point and its corresponding two adjacent edge lines, a corner inspection zone corresponding to the corner point is determined.

In step S809, in response to a determination that pixel values of one or more pixels in at least one corner inspection zone are greater than a first pixel threshold, it is determined that a suspected corner fold is present in the electrode plate body zone.

In step S810, pixels with pixel values within a pixel threshold range of a separator zone are extracted in at least one corner inspection zone to obtain a set of abnormal pixels.

In step S811, the set of abnormal pixels is divided into at least one independently connected abnormal pixel region.

In step S812, in response to an area of any abnormal pixel region being greater than a preset area threshold, it is determined that a corner fold is present in the electrode plate body zone.

In step S813, a detection result is output.

The steps in the method 800 have same features as the corresponding steps in the method 500. For brevity, details are not repeated herein.

In the method 800 of the embodiments of this application, a cathode electrode plate of the composite material strip can be inspected in real time for a corner fold in the lamination process, which is beneficial for relevant personnel to adjust relevant components of a laminator in a timely manner to prevent the electrode plate from generating a corner fold defect again in the lamination process, thereby reducing waste of production materials and improving the equipment efficiency of the laminator. In addition, the foregoing method for corner fold detection on the electrode plate based on computer vision technology can also improve the accuracy of corner fold detection on the electrode plate, thereby effectively controlling the outflow of cell assemblies with a corner fold on the cathode electrode plate.

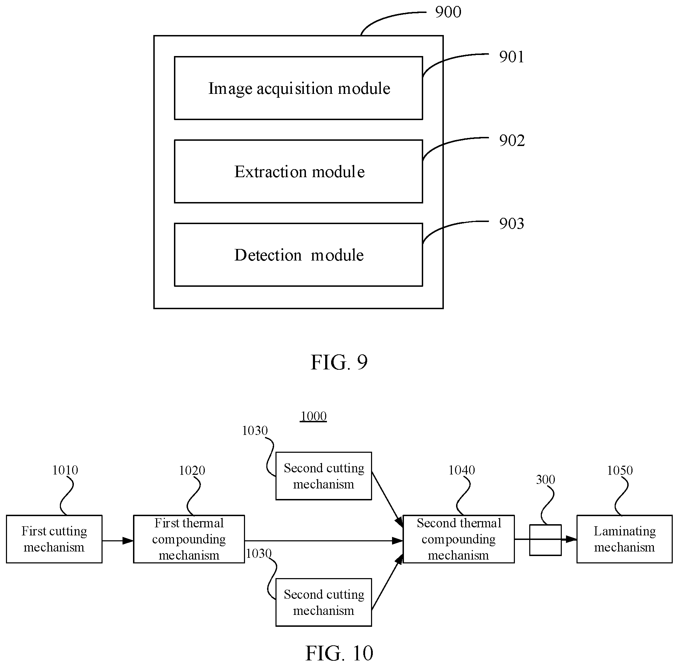

As shown in FIG. 9, an embodiment of this application further provides an apparatus 900 for corner fold detection on a cathode electrode plate of a composite material strip, including an image acquisition module 901, an extraction module 902, and a detection module 903. The image acquisition module 901 is configured to acquire a to-be-inspected image of the composite material strip using an image acquisition unit, the to-be-inspected image including an electrode plate body zone of the cathode electrode plate. The extraction module 902 is configured to extract the electrode plate body zone from the to-be-inspected image. The detection module 903 is configured to perform corner fold detection on the electrode plate body zone.

It should be understood that the modules of the apparatus 900 shown in FIG. 9 may correspond to the steps of the method 500 described in FIG. 5. Thus, the operations, features, and advantages described above for the method 500 are equally applicable to the apparatus 900 and the modules included therein. For brevity, some operations, features, and advantages are not repeated herein.

For the apparatus for corner fold detection on a cathode electrode plate of a composite material strip in this embodiment of this application, the cathode electrode plate of the composite material strip can be inspected in real time for a corner fold in the lamination process, which is beneficial for relevant personnel to adjust relevant components of a laminator in a timely manner, thereby reducing waste of production materials and improving the equipment efficiency of the laminator. In addition, the accuracy of corner fold detection on the electrode plate can be improved, thereby effectively controlling the outflow of cell assemblies with a corner fold on the electrode plate.

An embodiment of this application further provides an electronic device including at least one processor and a memory in communication connection with the at least one processor, where the memory has stored thereon instructions executable by the at least one processor, and when the instructions are executed by the at least one processor, the at least one processor is enabled to perform the foregoing method 500 for corner fold detection on a cathode electrode plate of a composite material strip.

The electronic device can be applied to the foregoing system 300 for corner fold detection on a cathode electrode plate of a composite material strip as an electronic device 390.

For the electronic device in this embodiment of this application, the cathode electrode plate of the composite material strip can be inspected in real time for a corner fold in the lamination process, which is beneficial for relevant personnel to adjust relevant components of a laminator in a timely manner, thereby reducing waste of production materials and improving the equipment efficiency of the laminator. In addition, the accuracy of corner fold detection on the electrode plate can be improved, thereby effectively controlling the outflow of cell assemblies with a corner fold on the cathode electrode plate.

As shown in FIG. 10, an embodiment of this application further provides a laminator 1000 including the foregoing system 300 for corner fold detection on a cathode electrode plate of a composite material strip.

In some embodiments, the laminator 1000 may include a first cutting mechanism 1010, a first thermal compounding mechanism 1020, two second cutting mechanisms 1030, a second thermal compounding mechanism 1040, a laminating mechanism 1050, and a system 300 that are disposed in sequence, where the system 300 is disposed between the second thermal compounding mechanism 1040 and the laminating mechanism 1050.

The features of the first cutting mechanism 1010, the first thermal compounding mechanism 1020, the second cutting mechanism 1030, the second thermal compounding mechanism 1040, and the laminating mechanism 1050 of the laminator 1000 are the same as those of the first cutting mechanism 210, the first thermal compounding mechanism 220, the second cutting mechanism 230, the second thermal compounding mechanism 240 and the laminating mechanism 250 of the laminator 200 in FIG. 2. For brevity, details are not repeated herein.

In the foregoing embodiment solution of the laminator 1000, the cathode electrode plate of the composite material strip can be inspected in real time for a corner fold in the lamination process, which is beneficial for relevant personnel to adjust relevant components of the laminator in a timely manner, thereby reducing waste of production materials and improving the equipment efficiency of the laminator. In addition, the accuracy of corner fold detection on the electrode plate can be improved, thereby effectively controlling the outflow of cell assemblies with a corner fold on the cathode electrode plate.

An embodiment of this application further provides a computer-readable storage medium having stored thereon computer instructions, where the computer instructions are configured to enable a computer to perform the method 500 for corner fold detection on a cathode electrode plate of a composite material strip according to any one of the foregoing embodiments.

An embodiment of this application further provides a computer program product including a computer program, where when the computer program is executed by a processor, the method 500 for corner fold detection on a cathode electrode plate of a composite material strip according to any one of the foregoing embodiments is implemented.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A computer-implemented method (500, 800) for corner fold detection on a cathode electrode plate of a composite material strip, comprising:
acquiring (S501) a to-be-inspected image of the composite material strip by using an image acquisition unit, wherein the to-be-inspected image comprises an electrode plate body zone of the cathode electrode plate;
extracting (S502) the electrode plate body zone from the to-be-inspected image; and
performing (S503) corner fold detection on the electrode plate body zone, wherein the performing (S503) corner fold detection on the electrode plate body zone comprises:
determining a plurality of corner inspection zones based on the electrode plate body zone, wherein each corner inspection zone comprises a corresponding one of a plurality of corner points of the electrode plate body zone, the plurality of corner points being formed by intersection of every two adjacent ones of a plurality of edge lines of the electrode plate body zone;
performing corner fold detection on the plurality of corner inspection zones;
determining whether a pixel value of each pixel in each corner inspection zone is greater than a first pixel threshold; and
determining that a corner fold is present in the electrode plate body zone in response to a determination that pixel values of one or more pixels in at least one corner inspection zone are greater than a first pixel threshold;
wherein when the to-be-inspected image further comprises a separator zone surrounding the electrode plate body zone, the determining that a corner fold is present in the electrode plate body zone in response to a determination that pixel values of one or more pixels in at least one corner inspection zone are greater than a first pixel threshold comprises:
determining (S809) that a suspected corner fold is present in the electrode plate body zone in response to a determination that pixel values of one or more pixels in at least one corner inspection zone are greater than a first pixel threshold;
extracting (S810) pixels with pixel values within a pixel threshold range of the separator zone in at least one corner inspection zone to obtain a set of abnormal pixels;
dividing (S811) the set of abnormal pixels into at least one independent connected abnormal pixel region; and
determining (S812) that a corner fold is present in the electrode plate body zone in response to an area of any abnormal pixel region being greater than a preset area threshold.

2. The method (500, 800) according to claim 1, wherein:
the extracting (S502) the electrode plate body zone from the to-be-inspected image comprises:
extracting the electrode plate body zone from the to-be-inspected image at least based on a first pixel value range of the electrode plate body zone; and
preferably,
the to-be-inspected image further comprises a separator zone at least partially surrounding the electrode plate body zone, a backup roller zone at least partially surrounding the separator zone, and a plurality of tab protruding zones located at two sides of the separator zone, wherein the extracting the electrode plate body zone from the to-be-inspected image at least based on a first pixel value range of the electrode plate body zone comprises:
based on a corresponding second pixel threshold range of the backup roller zone, removing (S803) the backup roller zone from the to-be-inspected image to obtain a first intermediate image;
extracting (S804), from the first intermediate image, an image of a maximum rectangular region inscribed in an edge of the first intermediate image as a second intermediate image, to remove the plurality of tab protruding zones; and
extracting (S805) the electrode plate body zone from the second intermediate image based on a corresponding first pixel threshold range of the electrode plate body zone.

3. The method (500, 800) according to claim 1, wherein each corner inspection zone is located in a region enclosed by the plurality of edge lines of the electrode plate body zone, and a corresponding one of the plurality of corner points is used as one vertex of the corner inspection zone.

4. The method (500, 800) according to claim 1, wherein the determining a plurality of corner inspection zones based on the electrode plate body zone comprises:
determining the plurality of corner points of the electrode plate body zone; and
based on each corner point and its corresponding two adjacent edge lines, determining (S808) a corner inspection zone corresponding to the corner point.

5. The method (500, 800) according to claim 4, wherein the determining the plurality of corner points of the electrode plate body zone comprises:
determining a minimum rectangular region circumscribing the electrode plate body zone; and
determining four vertices of the minimum rectangular region as the plurality of corner points.

6. The method (500, 800) according to claim 4, wherein the determining the plurality of corner points of the electrode plate body zone comprises:
determining (S806) the plurality of edge lines of the electrode plate body zone; and
determining (S807) intersection points of every two adjacent ones of the plurality of edge lines as the plurality of corner points,
wherein preferably, the determining the plurality of edge lines of the electrode plate body zone comprises:
determining position information of a center point of the electrode plate body zone;
based on the position information of the center point and size information of a standard electrode plate, forming a plurality of edge detection zones in the to-be-inspected image, each edge detection zone corresponding to one of the plurality of edge lines;
based on the plurality of edge detection zones, performing edge detection on the electrode plate body zone to obtain a plurality of sidelines by using an edge detection algorithm; and
based on the plurality of sidelines, generating the plurality of edge lines of the electrode plate body zone,
wherein further preferably, the generating a plurality of edge lines of the electrode plate body zone comprises:
determining an angle of each of the plurality of sidelines with respect to a corresponding edge line of the to-be-inspected image; and
determining the sidelines as edge lines in response to the angle of each sideline being within a corresponding angle threshold range.

7. An apparatus (900) for corner fold detection on a cathode electrode plate (120) of a composite material strip (301), comprising:
an image acquisition module (901) for acquiring a to-be-inspected image of the composite material strip by using an image acquisition unit (310, 320), wherein the to-be-inspected image comprises an electrode plate body zone of the cathode electrode plate (120);
an extraction module (902), wherein the extraction module (902) is configured to extract the electrode plate body zone from the to-be-inspected image; and
a detection module (903), wherein the detection module (903) is configured to perform corner fold detection on the electrode plate body zone, wherein the corner fold detection on the electrode plate body zone comprises:
determining a plurality of corner inspection zones based on the electrode plate body zone, wherein each corner inspection zone comprises a corresponding one of a plurality of corner points of the electrode plate body zone, the plurality of corner points being formed by intersection of every two adjacent ones of a plurality of edge lines of the electrode plate body zone;
performing corner fold detection on the plurality of corner inspection zones;
determining whether a pixel value of each pixel in each corner inspection zone is greater than a first pixel threshold; and
determining that a corner fold is present in the electrode plate body zone in response to a determination that pixel values of one or more pixels in at least one corner inspection zone are greater than a first pixel threshold;
wherein when the to-be-inspected image further comprises a separator zone surrounding the electrode plate body zone, the determining that a corner fold is present in the electrode plate body zone in response to a determination that pixel values of one or more pixels in at least one corner inspection zone are greater than a first pixel threshold comprises:
determining (S809) that a suspected corner fold is present in the electrode plate body zone in response to a determination that pixel values of one or more pixels in at least one corner inspection zone are greater than a first pixel threshold;
extracting (S810) pixels with pixel values within a pixel threshold range of the separator zone in at least one corner inspection zone to obtain a set of abnormal pixels;
dividing (S811) the set of abnormal pixels into at least one independent connected abnormal pixel region; and
determining (S812) that a corner fold is present in the electrode plate body zone in response to an area of any abnormal pixel region being greater than a preset area threshold

8. An electronic device (390) comprising at least one processor and a memory in communication connection with the at least one processor, wherein
the memory has stored thereon instructions executable by the at least one processor, and when the instructions are executed by the at least one processor, the at least one processor is enabled to perform the method according to any one of claims 1 to 6.

9. A system (300) for corner fold detection on a cathode electrode plate (120) of a composite material strip (301), comprising:
an image acquisition unit (310, 320) for acquiring a to-be-inspected image of the composite material strip (301); and
the electronic device (390) according to claim 8, wherein the electronic device (390) is connected to the image acquisition unit (310, 320).

10. The system (300) according to claim 9, wherein:
the to-be-inspected image comprises a first image of a first surface of the composite material strip (301) and a second image of a second surface of the composite material strip (301) opposite to the first surface, wherein the image acquisition unit (310, 320) comprises:
a first image acquisition unit (310) for acquiring the first image of the first surface of the composite material strip (301); and
a second image acquisition unit (320) for acquiring the second image of the second surface of the composite material strip (301);
preferably,
the first image acquisition unit (310) is a first line scan camera and the second image acquisition unit (320) is a second line scan camera; and
the system (300) further comprises a first line light source (330) for providing illumination to an image acquisition region of the first line scan camera and a second line light source (340) for providing illumination to an image acquisition region of the second line scan camera;
preferably,
the system (300) further comprises:
a first backup roller (350) and a first encoder (370) connected to the first backup roller (350), wherein the first backup roller (350) abuts against the first surface of the composite material strip (301), and the first encoder (370) is configured to send a pulse signal to the first line scan camera as the composite material strip (301) moves on the first backup roller (350), to trigger the first line scan camera to take pictures line by line; and
a second backup roller (360) and a second encoder (380) connected to the second backup roller (360), wherein the second backup roller (360) abuts against the second surface of the composite material strip (301), and the second encoder (380) is configured to send a pulse signal to the second line scan camera as the composite material strip (301) moves on the second backup roller (360), to trigger the second line scan camera to take pictures line by line; and
further preferably,
a tangent position (S1) between the composite material strip (301) and the first backup roller (350) is located within the image acquisition region of the first line scan camera, and a tangent position (S2) between the composite material strip (301) and the second backup roller (360) is located in the image acquisition region of the second line scan camera.

11. A laminator (1000) comprising the system (300) according to claim 9 or 10.

12. A computer-readable storage medium have stored thereon computer instructions, wherein the computer instructions are configured to enable a computer to perform the method according to any one of claims 1 to 6.

13. A computer program product comprising a computer program, wherein when the computer program is executed by a processor, the method according to any one of claims 1 to 6 is implemented.

## Patentansprüche

1. Computerimplementiertes Verfahren (500, 800) zum Erkennen von Eckfalten an einer Kathodenelektrodenplatte eines Verbundmaterialstreifens, das Folgendes beinhaltet:
Aufnehmen (S501) eines zu prüfenden Bildes des Verbundmaterialstreifens mittels einer Bildaufnahmeeinheit, wobei das zu prüfende Bild eine Elektrodenplatten-Körperzone der Kathodenelektrodenplatte umfasst;
Extrahieren (S502) der Elektrodenplatten-Körperzone aus dem zu prüfenden Bild; und
Durchführen (S503) von Eckfaltenerkennung an der Elektrodenplatten-Körperzone, wobei das Durchführen (S503) von Eckfaltenerkennung an der Elektrodenplatten-Körperzone Folgendes beinhaltet:
Bestimmen mehrerer Eckprüfzonen auf der Basis der Elektrodenplatten-Körperzone, wobei jede Eckprüfzone einen entsprechenden von mehreren Eckpunkten der Elektrodenplatten-Körperzone umfasst, wobei die mehreren Eckpunkte durch den Schnittpunkt von jeweils zwei benachbarten von mehreren Kantenlinien der Elektrodenplatten-Körperzone gebildet werden;
Durchführen von Eckfaltenerkennung an den mehreren Eckprüfzonen;
Feststellen, ob ein Pixelwert jedes Pixels in jeder Eckprüfzone größer als ein erster Pixelschwellenwert ist; und
Feststellen, dass in der Elektrodenplatten-Körperzone eine Eckfalte vorliegt, als Reaktion auf eine Feststellung, dass Pixelwerte eines oder mehrerer Pixel in mindestens einer Eckprüfzone größer als ein erster Pixelschwellenwert sind;
wobei, wenn das zu prüfende Bild ferner eine die Elektrodenplatten-Körperzone umgebende Trennzone umfasst, das Feststellen, dass in der Elektrodenplatten-Körperzone eine Eckfalte vorliegt, als Reaktion auf eine Feststellung, dass Pixelwerte eines oder mehrerer Pixel in mindestens einer Eckprüfzone größer als ein erster Pixelschwellenwert sind, Folgendes beinhaltet:
Feststellen (S809), dass in der Elektrodenplatten-Körperzone vermutlich eine Eckfalte vorliegt, als Reaktion auf eine Feststellung, dass die Pixelwerte eines oder mehrerer Pixel in mindestens einer Eckprüfzone größer als ein erster Pixelschwellenwert sind;
Extrahieren (S810) von Pixeln mit Pixelwerten innerhalb eines Pixelschwellenwertbereichs der Trennzone in mindestens einer Eckprüfzone, um einen Satz von anomalen Pixeln zu erhalten;
Unterteilen (S811) des Satzes von anomalen Pixeln in mindestens eine unabhängige, zusammenhängende Region anomaler Pixel; und
Feststellen (S812), dass in der Elektrodenplatten-Körperzone eine Eckfalte vorliegt, als Reaktion darauf, dass eine Fläche einer beliebigen Region anomaler Pixel größer als ein voreingestellter Flächenschwellenwert ist.

2. Verfahren (500, 800) nach Anspruch 1, wobei:
das Extrahieren (S502) der Elektrodenplatten-Körperzone aus dem zu prüfenden Bild Folgendes beinhaltet:
Extrahieren der Elektrodenplatten-Körperzone aus dem zu prüfenden Bild zumindest auf der Basis eines ersten Pixelwertebereichs der Elektrodenplatten-Körperzone; und
wobei vorzugsweise
das zu prüfende Bild ferner Folgendes umfasst: eine Trennzone, die die Elektrodenplatten-Körperzone zumindest teilweise umgibt, eine Stützrollenzone, die die Trennzone zumindest teilweise umgibt, und mehrere Laschenvorsprungszonen, die sich an zwei Seiten der Trennzone befinden, wobei das Extrahieren der Elektrodenplatten-Körperzone aus dem zu prüfenden Bild zumindest auf der Basis eines ersten Pixelwertebereichs der Elektrodenplatten-Körperzone Folgendes beinhaltet:
Entfernen (S803), auf der Basis eines entsprechenden zweiten Pixelschwellenwertebereichs der Stützrollenzone, der Stützrollenzone aus dem zu prüfenden Bild, um ein erstes Zwischenbild zu erhalten;
Extrahieren (S804), aus dem ersten Zwischenbild, eines Bildes einer in eine Kante des ersten Zwischenbildes eingeschriebenen maximalen rechteckigen Region als zweites Zwischenbild, um die mehreren Laschenvorsprungszonen zu entfernen; und
Extrahieren (S805) der Elektrodenplatten-Körperzone aus dem zweiten Zwischenbild auf der Basis eines entsprechenden ersten Pixelschwellenwertebereichs der Elektrodenplatten-Körperzone.

3. Verfahren (500, 800) nach Anspruch 1, wobei sich jede Eckprüfzone in einer von den mehreren Kantenlinien der Elektrodenplatten-Körperzone umschlossenen Region befindet und ein entsprechender der mehreren Eckpunkte als ein Scheitelpunkt der Eckprüfzone verwendet wird.

4. Verfahren (500, 800) nach Anspruch 1, wobei das Bestimmen mehrerer Eckprüfzonen auf der Basis der Elektrodenplatten-Körperzone Folgendes beinhaltet:
Bestimmen der mehreren Eckpunkte der Elektrodenplatten-Körperzone; und
Bestimmen (S808) einer dem Eckpunkt entsprechenden Eckprüfzone auf der Basis jedes Eckpunkts und seiner beiden entsprechenden benachbarten Kantenlinien.

5. Verfahren (500, 800) nach Anspruch 4, wobei das Bestimmen der mehreren Eckpunkte der Elektrodenplatten-Körperzone Folgendes beinhaltet:
Bestimmen einer die Elektrodenplatten-Körperzone umschreibenden minimalen rechteckigen Region; und
Bestimmen von vier Scheitelpunkten der minimalen rechteckigen Region als die mehreren Eckpunkte.

6. Verfahren (500, 800) nach Anspruch 4, wobei das Bestimmen der mehreren Eckpunkte der Elektrodenplatten-Körperzone Folgendes beinhaltet:
Bestimmen (S806) der mehreren Kantenlinien der Elektrodenplatten-Körperzone; und
Bestimmen (S807) von Schnittpunkten von jeweils zwei benachbarten der mehreren Kantenlinien als die mehreren Eckpunkte,
wobei das Bestimmen der mehreren Kantenlinien der Elektrodenplatten-Körperzone vorzugsweise Folgendes beinhaltet:
Bestimmen von Positionsinformationen eines Mittelpunkts der Elektrodenplatten-Körperzone;
Bilden, auf der Basis der Positionsinformationen des Mittelpunkts und von Größeninformationen einer Standard-Elektrodenplatte, mehrerer Kantenerkennungszonen in dem zu prüfenden Bild, wobei jede Kantenerkennungszone einer der mehreren Kantenlinien entspricht;
Durchführen, auf der Basis der mehreren Kantenerkennungszonen, von Kantenerkennung an der Elektrodenplatten-Körperzone, um mittels eines Kantenerkennungsalgorithmus mehrere Seitenlinien zu erhalten; und
Erzeugen, auf der Basis der mehreren Seitenlinien, der mehreren Kantenlinien der Elektrodenplatten-Körperzone,
wobei das Erzeugen mehrerer Kantenlinien der Elektrodenplatten-Körperzone ferner vorzugsweise Folgendes beinhaltet:
Bestimmen eines Winkels jeder der mehreren Seitenlinien in Bezug auf eine entsprechende Kantenlinie des zu prüfenden Bildes; und
Bestimmen der Seitenlinien als Kantenlinien als Reaktion darauf, dass der Winkel jeder Seitenlinie innerhalb eines entsprechenden Winkelschwellenwertebereichs liegt.

7. Vorrichtung (900) zur Erkennung von Eckfalten an einer Kathodenelektrodenplatte (120) eines Verbundmaterialstreifens (301), die Folgendes umfasst:
ein Bildaufnahmemodul (901) zum Aufnehmen eines zu prüfenden Bildes des Verbundmaterialstreifens mittels einer Bildaufnahmeeinheit (310, 320), wobei das zu prüfende Bild eine Elektrodenplatten-Körperzone der Kathodenelektrodenplatte (120) umfasst;
ein Extraktionsmodul (902), wobei das Extraktionsmodul (902) zum Extrahieren der Elektrodenplatten-Körperzone aus dem zu prüfenden Bild konfiguriert ist; und
ein Erkennungsmodul (903), wobei das Erkennungsmodul (903) zum Durchführen von Eckfaltenerkennung an der Elektrodenplatten-Körperzone konfiguriert ist, wobei die Eckfaltenerkennung an der Elektrodenplatten-Körperzone Folgendes beinhaltet:
Bestimmen mehrerer Eckprüfzonen auf der Basis der Elektrodenplatten-Körperzone, wobei jede Eckprüfzone einen entsprechenden von mehreren Eckpunkten der Elektrodenplatten-Körperzone umfasst, wobei die mehreren Eckpunkte durch den Schnittpunkt von jeweils zwei benachbarten von mehreren Kantenlinien der Elektrodenplatten-Körperzone gebildet werden;
Durchführen von Eckfaltenerkennung an den mehreren Eckprüfzonen;
Feststellen, ob ein Pixelwert jedes Pixels in jeder Eckprüfzone größer als ein erster Pixelschwellenwert ist; und
Feststellen, dass in der Elektrodenplatten-Körperzone eine Eckfalte vorliegt, als Reaktion auf eine Feststellung, dass Pixelwerte eines oder mehrerer Pixel in mindestens einer Eckprüfzone größer als ein erster Pixelschwellenwert sind;
wobei, wenn das zu prüfende Bild ferner eine die Elektrodenplatten-Körperzone umgebende Trennzone umfasst, das Feststellen, dass in der Elektrodenplatten-Körperzone eine Eckfalte vorliegt, als Reaktion auf eine Feststellung, dass Pixelwerte eines oder mehrerer Pixel in mindestens einer Eckprüfzone größer als ein erster Pixelschwellenwert sind, Folgendes beinhaltet:
Feststellen (S809), dass in der Elektrodenplatten-Körperzone vermutlich eine Eckfalte vorliegt, als Reaktion auf eine Feststellung, dass Pixelwerte eines oder mehrerer Pixel in mindestens einer Eckprüfzone größer als ein erster Pixelschwellenwert sind;
Extrahieren (S810) von Pixeln mit Pixelwerten innerhalb eines Pixelschwellenwertebereichs der Trennzone in mindestens einer Eckprüfzone, um einen Satz von anomalen Pixeln zu erhalten;
Unterteilen (S811) des Satzes von anomalen Pixeln in mindestens eine unabhängige, zusammenhängende Region anomaler Pixel; und
Feststellen (S812), dass in der Elektrodenplatten-Körperzone eine Eckfalte vorliegt, als Reaktion darauf, dass eine Fläche einer beliebigen Region anomaler Pixel größer als ein voreingestellter Flächenschwellenwert ist.

8. Elektronisches Gerät (390), das mindestens einen Prozessor und einen Speicher in Kommunikationsverbindung mit dem mindestens einen Prozessor umfasst, wobei
auf dem Speicher von dem mindestens einen Prozessor ausführbare Befehle gespeichert sind, und wobei der mindestens eine Prozessor bei Ausführung der Befehle von dem mindestens einen Prozessor zum Durchführen des Verfahrens nach einem der Ansprüche 1 bis 6 befähigt wird.

9. System (300) zur Erkennung von Eckfalten an einer Kathodenelektrodenplatte (120) eines Verbundmaterialstreifens (301), das Folgendes umfasst:
eine Bildaufnahmeeinheit (310, 320) zum Aufnehmen eines zu prüfenden Bildes des Verbundmaterialstreifens (301); und
das elektronische Gerät (390) nach Anspruch 8, wobei das elektronische Gerät (390) mit der Bildaufnahmeeinheit (310, 320) verbunden ist.

10. System (300) nach Anspruch 9, wobei:
das zu prüfende Bild ein erstes Bild einer ersten Oberfläche des Verbundmaterialstreifens (301) und ein zweites Bild einer der ersten Oberfläche gegenüberliegenden zweiten Oberfläche des Verbundmaterialstreifens (301) umfasst, wobei die Bildaufnahmeeinheit (310, 320) Folgendes umfasst:
eine erste Bildaufnahmeeinheit (310) zum Aufnehmen des ersten Bildes der ersten Oberfläche des Verbundmaterialstreifens (301); und
eine zweite Bildaufnahmeeinheit (320) zum Aufnehmen des zweiten Bildes der zweiten Oberfläche des Verbundmaterialstreifens (301);
wobei vorzugsweise
die erste Bildaufnahmeeinheit (310) eine erste Zeilenkamera und die zweite Bildaufnahmeeinheit (320) eine zweite Zeilenkamera ist; und
das System (300) ferner eine erste Zeilenlichtquelle (330) zur Beleuchtung einer Bildaufnahmeregion der ersten Zeilenkamera und eine zweite Zeilenlichtquelle (340) zur Beleuchtung einer Bildaufnahmeregion der zweiten Zeilenkamera umfasst;
wobei vorzugsweise
das System (300) ferner Folgendes umfasst:
eine erste Stützrolle (350) und einen mit der ersten Stützrolle (350) verbundenen ersten Encoder (370), wobei die erste Stützrolle (350) an der ersten Oberfläche des Verbundmaterialstreifens (301) anliegt und der erste Encoder (370) zum Senden eines Impulssignals zur ersten Zeilenkamera konfiguriert ist, während sich der Verbundmaterialstreifen (301) auf der ersten Stützrolle (350) bewegt, um das zeilenweise Aufnehmen von Bildern durch die erste Zeilenkamera auszulösen; und
eine zweite Stützrolle (360) und einen mit der zweiten Stützrolle (360) verbundenen zweiten Encoder (380), wobei die zweite Stützrolle (360) an der zweiten Oberfläche des Verbundmaterialstreifens (301) anliegt und der zweite Encoder (380) zum Senden eines Impulssignals zu der zweiten Zeilenkamera konfiguriert ist, während sich der Verbundmaterialstreifen (301) auf der zweiten Stützrolle (360) bewegt, um das zeilenweise Aufnehmen von Bildern durch die zweite Zeilenkamera auszulösen; und
wobei sich ferner vorzugsweise
sich eine Tangentialposition (S1) zwischen dem Verbundmaterialstreifen (301) und der ersten Stützrolle (350) innerhalb der Bildaufnahmeregion der ersten Zeilenkamera befindet und sich eine Tangentialposition (S2) zwischen dem Verbundmaterialstreifen (301) und der zweiten Stützrolle (360) in der Bildaufnahmeregion der zweiten Zeilenkamera befindet.

11. Laminiergerät (1000), das das System (300) nach Anspruch 9 oder 10 umfasst.

12. Computerlesbares Speichermedium, auf dem Computerbefehle gespeichert sind, wobei die Computerbefehle zum Befähigen eines Computers zum Durchführen des Verfahrens nach einem der Ansprüche 1 bis 6 konfiguriert sind.

13. Computerprogrammprodukt, das ein Computerprogramm umfasst, wobei bei Ausführung des Computerprogramms durch einen Prozessor das Verfahren nach einem der Ansprüche 1 bis 6 implementiert wird.

## Revendications

1. Procédé mis en œuvre par ordinateur (500, 800) pour la détection de plis en coin sur une électrode plane cathodique d'une bande de matériau composite, comprenant les étapes consistant à :
acquérir (S501) une image à inspecter de la bande de matériau composite au moyen d'une unité d'acquisition d'image, l'image à inspecter comprenant une zone de corps d'électrode plane de l'électrode plane cathodique ;
extraire (S502) la zone de corps d'électrode plane de l'image à inspecter ; et
réaliser (S503) une détection de plis en coin sur la zone de corps d'électrode plane, la réalisation (S503) de la détection de plis en coin sur la zone de corps d'électrode plane comprenant les étapes consistant à :
déterminer une pluralité de zones d'inspection de coin sur la base de la zone de corps d'électrode plane, chaque zone d'inspection de coin comprenant un point en coin correspondant parmi une pluralité de points en coin de la zone de corps d'électrode plane, la pluralité de points en coin étant formés par l'intersection de chaque ligne de bord adjacente de deux en deux parmi une pluralité de lignes de bord de la zone de corps d'électrode plane ;
réaliser une détection de plis en coin sur la pluralité de zones d'inspection de coin ;
déterminer si une valeur de pixel de chaque pixel dans chaque zone d'inspection de coin est supérieure à un premier seuil de pixel ; et
déterminer qu'un pli en coin est présent dans la zone de corps d'électrode plane en réponse à une détermination selon laquelle des valeurs de pixel d'un ou plusieurs pixels dans au moins une zone d'inspection de coin sont supérieures à un premier seuil de pixel ;
lorsque l'image à inspecter comprend en outre une zone de séparateur entourant la zone de corps d'électrode plane, la détermination qu'un pli en coin est présent dans la zone de corps d'électrode plane en réponse à une détermination selon laquelle des valeurs de pixel d'un ou plusieurs pixels dans au moins une zone d'inspection de coin sont supérieures à un premier seuil de pixel comprenant les étapes consistant à :
déterminer (S809) qu'un pli en coin suspect est présent dans la zone de corps d'électrode plane en réponse à une détermination selon laquelle des valeurs de pixel d'un ou de plusieurs pixels dans au moins une zone d'inspection de coin sont supérieures à un premier seuil de pixel ;
extraire (S810) des pixels ayant des valeurs de pixel comprises dans une plage de seuils de pixel de la zone de séparateur dans au moins une zone d'inspection de coin pour obtenir un ensemble de pixels anormaux ;
diviser (S811) l'ensemble de pixels anormaux en au moins une région indépendante de pixels anormaux reliés ; et
déterminer (S812) qu'un pli en coin est présent dans la zone de corps d'électrode plane en réponse au fait qu'une surface de toute région de pixels anormaux est supérieure à un seuil de surface prédéfini.

2. Procédé (500, 800) selon la revendication 1,
l'extraction (S502) de la zone de corps d'électrode plane de l'image à inspecter comprenant l'étape consistant à :
extraire la zone de corps d'électrode plane de l'image à inspecter au moins sur la base d'une première plage de valeurs de pixel de la zone de corps d'électrode plane ; et
de préférence,
l'image à inspecter comprenant en outre une zone de séparateur entourant au moins en partie la zone de corps d'électrode plane, une zone de rouleau de soutien entourant au moins en partie la zone de séparateur, et une pluralité de zones saillantes de pattes situées sur deux côtés de la zone de séparateur, l'extraction de la zone de corps d'électrode plane de l'image à inspecter au moins sur la base d'une première plage de valeurs de pixel de la zone de corps d'électrode plane comprenant les étapes consistant à :
sur la base d'une seconde plage de seuils de pixel correspondante de la zone de rouleau de soutien, supprimer (S803) la zone de rouleau de soutien de l'image à inspecter pour obtenir une première image intermédiaire ;
extraire (S804), de la première image intermédiaire, une image d'une région rectangulaire maximale inscrite dans un bord de la première image intermédiaire comme étant une seconde image intermédiaire, pour supprimer la pluralité de zones saillantes de pattes ; et
extraire (S805) la zone de corps d'électrode plane de la seconde image intermédiaire sur la base d'une première plage de seuils de pixel correspondante de la zone de corps d'électrode plane.

3. Procédé (500, 800) selon la revendication 1, chaque zone d'inspection de coin étant située dans une région délimitée par la pluralité de lignes de bord de la zone de corps d'électrode plane, et un point en coin correspondant parmi la pluralité de points en coin étant utilisé comme sommet de la zone d'inspection de coin.

4. Procédé (500, 800) selon la revendication 1, la détermination d'une pluralité de zones d'inspection de coin sur la base de la zone de corps d'électrode plane comprenant les étapes consistant à :
déterminer la pluralité de points en coin de la zone de corps d'électrode plane ; et
sur la base de chaque point en coin et de ses deux lignes de bord adjacentes correspondantes, déterminer (S808) une zone d'inspection de coin correspondant au point en coin.

5. Procédé (500, 800) selon la revendication 4, la détermination de la pluralité de points en coin de la zone de corps d'électrode plane comprenant les étapes consistant à :
déterminer une région rectangulaire minimale délimitant la zone de corps d'électrode plane ; et
déterminer quatre sommets de la région rectangulaire minimale comme étant la pluralité de points en coin.

6. Procédé (500, 800) selon la revendication 4, la détermination de la pluralité de points en coin de la zone de corps d'électrode plane comprenant les étapes consistant à :
déterminer (S806) la pluralité de lignes de bord de la zone de corps d'électrode plane ; et
déterminer (S807) des points d'intersection de chaque ligne de bord adjacente de deux en deux parmi la pluralité de lignes de bord comme étant la pluralité de points en coin,
de préférence, la détermination de la pluralité de lignes de bord de la zone de corps d'électrode plane comprenant les étapes consistant à :
déterminer des informations de position d'un point central de la zone de corps d'électrode plane ;
sur la base des informations de position du point central et d'informations de taille d'une électrode plane standard, former une pluralité de zones de détection de bord dans l'image à inspecter, chaque zone de détection de bord correspondant à une ligne de bord parmi la pluralité de lignes de bord ;
sur la base de la pluralité de zones de détection de bord, réaliser une détection de bord sur la zone de corps d'électrode plane au moyen d'un algorithme de détection de bord pour obtenir une pluralité de lignes latérales ; et
sur la base de la pluralité de lignes latérales, générer la pluralité de lignes de bord de la zone de corps d'électrode plane,
de préférence en outre, la génération d'une pluralité de lignes de bord de la zone de corps d'électrode plane comprenant les étapes consistant à :
déterminer un angle de chaque ligne latérale parmi la pluralité de lignes latérales par rapport à une ligne de bord correspondante de l'image à inspecter ; et
déterminer les lignes latérales comme étant des lignes de bord en réponse au fait que l'angle de chaque ligne latérale se trouve dans une plage de seuils d'angle correspondante.

7. Appareil (900) pour la détection de plis en coin sur une électrode plane cathodique (120) d'une bande de matériau composite (301), comprenant :
un module d'acquisition d'image (901) pour acquérir une image à inspecter de la bande de matériau composite au moyen d'une unité d'acquisition d'image (310, 320), l'image à inspecter comprenant une zone de corps d'électrode plane de l'électrode plane cathodique (120) ;
un module d'extraction (902), le module d'extraction (902) étant configuré pour extraire la zone de corps d'électrode plane de l'image à inspecter ; et
un module de détection (903), le module de détection (903) étant configuré pour réaliser une détection de plis en coin sur la zone de corps d'électrode plane, la détection de plis en coin sur la zone de corps d'électrode plane comprenant les opérations consistant à :
déterminer une pluralité de zones d'inspection de coin sur la base de la zone de corps d'électrode plane, chaque zone d'inspection de coin comprenant un point en coin correspondant parmi une pluralité de points en coin de la zone de corps d'électrode plane, la pluralité de points en coin étant formés par l'intersection de chaque ligne de bord adjacente de deux en deux parmi une pluralité de lignes de bord de la zone de corps d'électrode plane ;
réaliser une détection de plis en coin sur la pluralité de zones d'inspection de coin ;
déterminer si une valeur de pixel de chaque pixel dans chaque zone d'inspection de coin est supérieure à un premier seuil de pixel ; et
déterminer qu'un pli en coin est présent dans la zone de corps d'électrode plane en réponse à une détermination selon laquelle des valeurs de pixel d'un ou plusieurs pixels dans au moins une zone d'inspection de coin sont supérieures à un premier seuil de pixel ;
lorsque l'image à inspecter comprend en outre une zone de séparateur entourant la zone de corps d'électrode plane, la détermination qu'un pli en coin est présent dans la zone de corps d'électrode plane en réponse à une détermination selon laquelle des valeurs de pixel d'un ou plusieurs pixels dans au moins une zone d'inspection de coin sont supérieures à un premier seuil de pixel comprenant les opérations consistant à :
déterminer (S809) qu'un pli en coin suspect est présent dans la zone de corps d'électrode plane en réponse à une détermination selon laquelle des valeurs de pixel d'un ou de plusieurs pixels dans au moins une zone d'inspection de coin sont supérieures à un premier seuil de pixel ;
extraire (S810) des pixels ayant des valeurs de pixel comprises dans une plage de seuils de pixel de la zone de séparateur dans au moins une zone d'inspection de coin pour obtenir un ensemble de pixels anormaux ;
diviser (S811) l'ensemble de pixels anormaux en au moins une région indépendante de pixels anormaux reliés ; et
déterminer (S812) qu'un pli en coin est présent dans la zone de corps d'électrode plane en réponse au fait qu'une surface de toute région de pixels anormaux est supérieure à un seuil de surface prédéfini.

8. Dispositif électronique (390), comprenant au moins un processeur et une mémoire connectée en communication à l'au moins un processeur,
des instructions exécutables par l'au moins un processeur étant stockées sur la mémoire, et l'exécution des instructions par l'au moins un processeur permettant à l'au moins un processeur de réaliser le procédé selon l'une quelconque des revendications 1 à 6.

9. Système (300) pour la détection de plis en coin sur une électrode plane cathodique (120) d'une bande de matériau composite (301), comprenant :
une unité d'acquisition d'image (310, 320) pour acquérir une image à inspecter de la bande de matériau composite (301) ; et
le dispositif électronique (390) selon la revendication 8, le dispositif électronique (390) étant connecté à l'unité d'acquisition d'image (310, 320).

10. Système (300) selon la revendication 9,
l'image à inspecter comprenant une première image d'une première surface de la bande de matériau composite (301) et une seconde image d'une seconde surface de la bande de matériau composite (301) opposée à la première surface, l'unité d'acquisition d'image (310, 320) comprenant :
une première unité d'acquisition d'image (310) pour acquérir la première image de la première surface de la bande de matériau composite (301) ; et
une seconde unité d'acquisition d'image (320) pour acquérir la seconde image de la seconde surface de la bande de matériau composite (301) ;
de préférence,
la première unité d'acquisition d'image (310) étant une première caméra à balayage linéaire, et la seconde unité d'acquisition d'image (320) étant une seconde caméra à balayage linéaire ; et
le système (300) comprenant en outre une première source de lumière linéaire (330) pour assurer l'éclairage d'une région d'acquisition d'image de la première caméra à balayage linéaire et une seconde source de lumière linéaire (340) pour assurer l'éclairage d'une région d'acquisition d'image de la seconde caméra à balayage linéaire ;
de préférence,
le système (300) comprenant en outre :
un premier rouleau de soutien (350) et un premier codeur (370) relié au premier rouleau de soutien (350), le premier rouleau de soutien (350) venant en butée contre la première surface de la bande de matériau composite (301), et le premier codeur (370) étant configuré pour envoyer un signal d'impulsion à la première caméra à balayage linéaire lorsque la bande de matériau composite (301) se déplace sur le premier rouleau de soutien (350), pour déclencher la prise de photos ligne par ligne par la première caméra à balayage linéaire ; et
un second rouleau de soutien (360) et un second codeur (380) relié au second rouleau de soutien (360), le second rouleau de soutien (360) venant en butée contre la seconde surface de la bande de matériau composite (301), et le second codeur (380) étant configuré pour envoyer un signal d'impulsion à la seconde caméra à balayage linéaire lorsque la bande de matériau composite (301) se déplace sur le second rouleau de soutien (360), pour déclencher la prise de photos ligne par ligne par la seconde caméra à balayage linéaire ; et
de préférence en outre,
une position tangente (S1) entre la bande de matériau composite (301) et le premier rouleau de soutien (350) étant située dans la région d'acquisition d'image de la première caméra à balayage linéaire, et une position tangente (S2) entre la bande de matériau composite (301) et le second rouleau de soutien (360) étant située dans la région d'acquisition d'image de la seconde caméra à balayage linéaire.

11. Dispositif de laminage (1000) comprenant le système (300) selon la revendication 9 ou 10.

12. Support de stockage lisible par ordinateur sur lequel sont stockées des instructions informatiques, les instructions informatiques étant configurées pour permettre à un ordinateur de réaliser le procédé selon l'une quelconque des revendications 1 à 6.

13. Produit-programme informatique comprenant un programme informatique qui, lorsqu'il est exécuté par un processeur, provoque la mise en œuvre du procédé selon l'une quelconque des revendications 1 à 6.
